# EUROPÄISCHE PATENTANMELDUNG

(11) **EP 1 296 263 A2**
(43) Veröffentlichungstag der Anmeldung: **26.03.2003**
(21) Anmeldenummer: 02020266.9
(22) Anmeldetag: 11.09.2002
(51) Int. Cl.: G06F 17/60

(54) **Börsenhandelssystem**

(30) Priorität: 22.09.2001 DE 10146866; 27.04.2002 EP 02009634
(71) Anmelder: vwd IS GmbH, 60318 Frankfurt am Main (DE)
(72) Erfinder: Martens, Albrecht, 61267 Neu Anspach (DE)
(74) Vertreter: KEIL & SCHAAFHAUSEN

(57) **Zusammenfassung**

Börsenhandelssystem mit einem zentralen Prozessor (2, 11) zur Abwicklung eines Handelsgeschäfts, der über eine Schnittstelle (3, 12) mit mindestens einem Intermediär-Rechner (4, 13) zur Weiterleitung von Handelsaufträgen an den zentralen Prozessor (2,11) und über eine weitere Schnittstelle (5, 14) mit mindestens einem Preis-Rechner (6, 15, 16, 36) zur Vorgabe eines Handelspreises verbindbar ist, wobei der zentrale Prozessor (2, 11) nach Erhalt einer Kursanfrage (A) von dem Intermediär-Rechner (4, 13) eine Preisanfrage (B) an den Preis-Rechner (6, 15, 16, 36) sendet, der Preis-Rechner (6, 15, 16) einen Handelspreis vorgibt und diesen als Preisantwort (C) an den zentralen Prozessor (2, 11) zurückgibt, der zentrale Prozessor (2, 11) aus der Preisantwort (C) eine Kursantwort (D) mit einer eindeutigen Vorgangskennung generiert und an den Intermediär-Rechner (4, 13) sendet, der Preisrechner (6, 15, 16, 36) den jeweils aktuellen Preis (E) bei einer Preisänderung oder in regelmäßigen Zeitintervallen für einen vorgebbaren Zeitraum an den zentralen Prozessor (2, 11) übermittelt, der bei jeder Preisänderung ein Kursupdate (F) mit einer eindeutigen Vorgangskennung generiert und an den Intermediär-Rechner (4, 13) sendet, der Intermediär-Rechner (4, 13) eine Handelsanforderung (H) zusammen mit der letzten übermittelten Vorgangskennung an den zentralen Prozessor (2, 11) richtet und der zentrale Prozessor (2, 11) die mit der Handelsanforderung (H) übermittelte Vorgangskennung mit der jeweils aktuellen Vorgangskennung vergleicht und bei Übereinstimmung eine Handelsbestätigung (I, K) an den Preis-Rechner (6, 15, 16, 36) und/oder den Intermediär-Rechner (4, 13) übermittelt. Ferner betrifft die Erfindung ein Internalisierungsmodul zur Filterung und Ausführung von Orderaufträgen.

## Beschreibung

Die Erfindung betrifft ein Börsenhandelssystem mit einem zentralen Prozessor zur Abwicklung eines Handelsgeschäfts, der über eine Schnittstelle mit mindestens einem Intermediär-Rechner zur Weiterleitung von Handelsaufträgen an den zentralen Prozessor und über eine weitere Schnittstelle mit mindestens einem Preis-Rechner zur Vorgabe eines Handelspreises verbindbar ist, sowie ein Internalisierungsmodul zur Filterung und Ausführung von Orderaufträgen.

Derzeit sind bereits Börsenhandelssysteme im Einsatz, die durch einen Intermediär-Rechner an allgemeine Computernetzwerke wie bspw. das Internet angeschlossen sind und dadurch einen direkten Zugriff für Endkunden, insbesondere auch Privatanleger, bieten. Bei einem derartigen System wird eine Handelsanfrage eines Privatkunden von dem Intermediär-Rechner durch einen zentralen Prozessor an den Preisrechner eines MarketMakers weitergeleitet, der das gewünschte Wertpapier zu einem bestimmten Kurs anbietet. Auf diese Preisanfrage hin versendet der MarketMaker von seinem Preis-Rechner aus den aktuellen Kurs an den zentralen Prozessor, der diesen über den Intermediär-Rechner an den Privatkunden weiterleitet. Wenn der Kunde das Wertpapier zu dem angebotenen Kurs kaufen möchte, schickt er eine Anfrage über die Ausführung der Order durch den Intermediär an den zentralen Prozessor, der diese Ausführungsanfrage an den MarketMaker weiterleitet. Dieser führt das Geschäft aus und sendet eine Ausführungsbestätigung oder im Falle des Scheiterns eine Fehlermeldung zurück. Diese Rückmeldung des MarketMakers wird von dem zentralen Prozessor über den Intermediär an den Kunden weitergeleitet. Bei diesem Börsenhandelssystem besteht jedoch der Nachteil, dass von der Erstellung des Angebots durch den MarketMaker bis zum Eintreffen des Handelsauftrags bei ihm aufgrund der langen Übertragungsstrecken vergleichsweise viel Zeit vergeht, so dass zu dieser Zeit der angebotene Kurs häufig bereits nicht mehr gültig ist. In diesem Fall kommt kein Geschäft zustande und es muss eine erneute Anfrage gestartet werden.

Aus EP 1 006 471 A2 ist ein Handelsverfahren bekannt, bei dem nach Eingang einer Orderanfrage von einem Nutzer ein Kursquote generiert wird, der abhängig von bestimmten Bedingungen entweder aus einem unmittelbar ausführbaren Kursquote oder einem Händler-Kursquote besteht und dem Nutzer mitgeteilt wird. Innerhalb eines vorgegebenen Zeitfensters wird eine daraufhin erfolgte konkrete Handelsanfrage durch den Nutzer zu diesem generierten Kursquote ausführt. Der unmittelbar ausführbare Kursquote kann dabei automatisch durch einen Kursserver erstellt werden, wenn bestimmte Bedingungen für das angefragte Ordergeschäft vorliegen. Nur wenn diese Bedingungen nicht erfüllt sind, wird bei verschiedenen Händlern nach einem Händler-Kursquote angefragt. Auch wenn durch dieses Verfahren der Handel für gängige Handelsgeschäfte beschleunigt werden kann, besteht der Nachteil, dass bspw. bei großen Handelsmengen oder selten gehandelten Wertpapieren nach der Überprüfung noch eine gesonderte Händleranfrage stattfinden muss, so dass für diese Geschäfte der Handelsablauf weiter kompliziert wird. Außerdem müssen sich die Händler für die gängigen Handelsgeschäfte im Vorhinein auf bestimmte Bedingungen festlegen und können nicht flexibel auf Änderungen im Wertpapierhandel reagieren.

Daher ist es Aufgabe der vorliegenden Erfindung, ein Börsenhandelssystem mit einer verbesserten Auftragsabwicklung vorzuschlagen.

Diese Aufgabe wird bei einem Börsenhandelssystem der eingangs genannten Art im Wesentlichen dadurch gelöst, dass
- der zentrale Prozessor nach Erhalt einer Kursanfrage von dem Intermediär-Rechner eine Preisanfrage an den Preis-Rechner sendet,
- der Preis-Rechner einen Handelspreis vorgibt und diesen als Preisantwort an den zentralen Prozessor zurückgibt,
- der zentrale Prozessor aus der Preisantwort eine Kursantwort mit einer eindeutigen Vorgangskennung generiert und an den Intermediär-Rechner sendet,
- der Preisrechner den jeweils aktuellen Preis bei einer Preisänderung oder in regelmäßigen Zeitintervallen für einen vorgebbaren Zeitraum an den zentralen Prozessor übermittelt, der bei jeder Preisänderung ein Kursupdate mit einer eindeutigen Vorgangskennung generiert und an den Intermediär-Rechner sendet,
- der Intermediär-Rechner eine Handelsanforderung zusammen mit der letzten übermittelten Vorgangskennung an den zentralen Prozessor richtet und
- der zentrale Prozessor die mit der Handelsanforderung übermittelte Vorgangskennung mit der jeweils aktuellen Vorgangskennung vergleicht und bei Übereinstimmung eine Handelsbestätigung an den Preis-Rechner und/oder den Intermediär-Rechner übermittelt.

Im Gegensatz zu bekannten Handelssystemen nach dem MarketMaking-Modell fällt hier die Entscheidung über den Abschluss eines Handelsgeschäfts bereits in dem zentralen Prozessor, ohne dass von außen eingegriffen würde. Dadurch wird ein Übertragungsweg zu dem Preis-Rechner des MarketMakers gespart, wobei durch die eindeutige Vorgangskennung gewährleistet ist, dass das Geschäft zu dem jeweils aktuell angebotenen Kurs des MarketMakers zustande kommt. Aufgrund des regelmäßigen Kursupdates und der damit verbundenen permanenten Quotierung durch den Preis-Rechner des MarketMakers werden die Reaktionszeiten des Handelssystems weiter verkürzt, da das Kursupdate unabhängig von einer konkreten Handelsanforderung durch den Kunden den jeweils aktuellen Kurs weitergibt und ein Update nicht erst nach einem nicht erfolgreichen Handelsauftrag erfolgt. Dadurch wird ein realer Echtzeithandel für das Börsenhandelssystem ermöglicht. Dies führt zu einer Erhöhung des Komforts und der Transparenz des Handelssystems und ermöglicht es den MarketMakern, schnell auf Kursänderungen im Wertpapierhandel zu reagieren.

Um die Abwicklung eines Handelsgeschäftes weiter zu erleichtern, wird erfindungsgemäß vorgeschlagen, dass der zentrale Prozessor nach einem Kursupdate ein Offset-Zeitfenster erzeugt, innerhalb dessen eine Handelsanforderung durch einen Kunden in jedem Fall akzeptiert wird, unabhängig davon, ob durch den Preis-Rechner des MarketMakers zwischenzeitlich bereits ein neues Preisupdate ausgegeben wurde oder nicht. Durch die Vermeidung solcher Überschneidungen wird das Börsenhandelssystem entlastet, wobei das Risiko für die MarketMaker wegen der Kürze des Zeitfensters beschränkt ist. Alternativ oder zusätzlich kann auch ein Bereich festgelegt werden, innerhalb dessen der aktuelle Preis bzw. das Kursupdate zum Zeitpunkt der Handelsanforderung liegen muss. Damit kann eine starre zeitliche Bindung vermieden werden, wenn sich der Kurs über einen längeren Zeitraum nicht nennenswert ändert, so dass sich die Wahrscheinlichkeit für einen Geschäftsabschluss erhöht. Um eine höhere Flexibilität innerhalb des Börsensystems zu erhalten, kann die Dauer des Offset-Zeitfensters und/oder die Breite des Bereichs bspw. auch für verschiedene MarketMaker jeweils unterschiedlich einstellbar sein. Für ein durchschnittliches Börsenhandelssystem liegt die Dauer des Offset-Zeitfensters typischerweise zwischen etwa 40 und 100 ms, wobei diese Zeitdauer je nach Größe des Systems und Geschwindigkeit der verwendeten Kommunikationskanäle auch unter- oder überschritten werden kann. Eine richtige Konfiguration der Offset-Zeit ist sinnvoll, um Beeinträchtigungen eines erfolgreichen Handelsablaufes durch System- oder Netzwerklaufzeiten zu vermeiden. Für den Bereich ist bspw. eine Abweichung von +- 1 % von dem quotierten Preis akzeptabel. Es ist jedoch auch möglich, absolute Werte zur Festlegung des Breitenbereichs anzugeben.

Zur Verkürzung der Kommunikationszeiten kann erfindungsgemäß in der Schnittstelle zwischen dem zentralen Prozessor und dem Intermediär-Rechner für das Kursupdate ein eigenständiger Kursupdate-Kanal eingerichtet werden, auf dem keine weitere Kommunikation stattfindet. Dies kann standardmäßig oder bspw. auf Anfrage durch den Intermediär-Rechner geschehen.

Ferner wird erfindungsgemäß vorgeschlagen, einer Systemanfrage/-antwort und/oder einem Systemereignis einen Zeitstempel zuzuordnen. Dies ermöglicht bei Ablage der verschiedenen Aktionen in Log-Verzeichnissen wie Listen, Dateien oder dgl., sämtliche Systemabläufe nachzuvollziehen oder das System zu überwachen.

Um das System bei Kommunikationsstörungen oder dgl. nicht übermäßig lange zu belasten und Manipulationen eines Orderauftrages zu erschweren, wird erfindungsgemäß eine maximale Orderzeit von einer ersten Kursanfrage durch den Kunden bis zu einer auf diese Kursanfrage folgende Handelsaufforderung vorgegeben, bei deren Überschreiten der zentrale Prozessor den Handelsauftrag abbricht. Diese Umlaufzeit kann bspw. abhängig von dem jeweiligen Intermediär-Rechner konfigurierbar sein. Nach Ablauf der maximalen Umlaufzeit werden die Referenzdaten aus Performance- und/oder Sicherheitsgründen gelöscht. Für typische Systeme kann die maximale Umlaufzeit von der ersten Anfrage bis zur Handelsaufforderung (Transaktionseingang) etwa 40 Sekunden betragen. Ein zusätzlicher Schutz vor Manipulationen kann dadurch erreicht werden, dass jedem Handelsauftrag intern eine feste Orderkennung zugeordnet und bei jeder Anfrage oder Antwort überprüft wird, so dass für Manipulationen eines Handelsauftrags diese interne Orderkennung bekannt sein müsste.

Außerdem kann der zentrale Prozessor erfindungsgemäß für einen Preis-Rechner des MarketMakers eine maximale Antwortzeit auf eine Preisanfrage vorgeben, nach deren Überschreiten die Preisanfrage an die Preis-Rechner anderer MarketMaker weitergeleitet oder eine Fehlermeldung an den Intermediär-Rechner gesendet wird. Dies dient insbesondere der Vermeidung langer Wartezeiten für den Kunden. Eine typische Antwortzeit für den Preis-Rechner kann je nach MarketMaker etwa 4 Sekunden betragen und frei einstellbar sein.

Nach einer besonderen Ausgestaltung des erfindungsgemäßen Systems wartet der zentrale Prozessor nach Sendung einer Handelsbestätigung an den Preis-Rechner eine Orderantwort von dem Preis-Rechner ab und sendet im Falle eines Einspruchsverzichts eine Handelsbestätigung an den Intermediär-Rechner, andernfalls eine Fehlermeldung. Somit bleibt dem MarketMaker die Möglichkeit, aus besonderen Gründen gegen die Handelsausführung Einspruch einzulegen. Dabei kann auch eine Einspruchszeit festgesetzt werden, nach deren Ablauf das Handelsgeschäft als zustande gekommen gilt. Hier beträgt eine sinnvolle Einspruchszeit etwa 20 Sekunden.

Vorzugsweise hängt eine Einspruchsberechtigung durch den Preis-Rechner von der Höhe der Abweichung zwischen der Kursantwort mit der zur Zeit der Handelsanforderung aktuellen Vorgangskennung und dem aktuellen Preis ab.

Somit liegt ein Einspruchsgrund bei einer signifikanten Abweichung zwischen dem quotierten Kurs und dem Referenzkurs bei Zustandekommen des Geschäfts vor, wobei die Höhe der Abweichung vorgebbar ist. Wenn dieser Modus alternativ zu der Zeitfensterregelung angewendet wird, wird das Börsenhandelssystem insgesamt flexibler, da die starre Zeitabhängigkeit für das Zustandekommen eines Handelsgeschäfts aufgehoben wird.

Ferner kann zur Regulierung des Börsenhandels dem Preis-Rechner eines bestimmten MarketMakers bei einem Handelsauftrag ein vorgebbarer Quote bspw. für ein bestimmtes Wertpapier durch den zentralen Rechner zugewiesen werden. Auf diese Weise kann ein MarketMaker bspw. ihm ausschließlich zugeordnete Wertpapiere auf dem System quotieren, d.h. wenn ein Handelsauftrag von einem Kunden eingeht, wird dieser zur Kursstellung ausschließlich an den vorgegebenen MarketMaker weitergeleitet (Dedicated MarketMaker Modus). Ebenso ist es möglich, primäre und sekundäre Preis-Rechner von verschiedenen MarketMakern zu definieren, wobei der primäre Preis-Rechner einen nach einem Regelwerk definierten angefragten Quote ausschließlich zugeteilt bekommt und alle anderen Anfragen außerhalb der Quoteverpflichtung zusätzlich auch an den sekundären Preis-Rechner weitergeleitet werden (Primary/Secondary MarketMaker Modus). In letzterem Fall kann der zentrale Prozessor entscheiden, mit welchem Preis-Rechner das Geschäft abgeschlossen wird.

In einer besonders vorteilhaften Ausgestaltung des erfindungsgemäßen Börsenhandelssystems sind mindestens zwei Preis-Rechner mit dem zentralen Prozessor verbindbar. Der zentrale Prozessor weist einen Kurskalkulator zur Ermittlung des günstigsten Kurses auf, wobei der zentrale Prozessor eine Kursanfrage an alle Preis-Rechner sendet, der Kurskalkulator die Preisantworten bzw. die aktuellen Preise aller Preis-Rechner vergleicht und der jeweils günstigste Preis an den Intermediär-Rechner gesendet wird. Indem der jeweils beste Preis errechnet und weitergeleitet wird, wird für Anleger und MarketMaker ein Handelsplatz mit hoher Preisqualität für den Kunden geschaffen und ein gesunder Wettbewerb zwischen allen MarketMakern gefördert.

Zur übersichtlichen Verteilung der Aufgaben innerhalb des zentralen Prozessors weist der zentrale Prozessor insbesondere einen Steuer-Prozessor zur Steuerung der Abläufe in dem Börsenhandelssystem, einen Überwachungs-Prozessor zur Überwachung der Handelsgeschäfte, einen Transaktions-Prozessor zur Aufzeichnung aller Transaktionen und/oder eine Datenbank auf. Dadurch ist das System skalierbar und modular aufgebaut und besitzt eine offene Architektur. Dabei ist der Steuer-Prozessor so eingerichtet, dass das Börsenhandelssystem auf ihm ohne Zugriff auf die anderen Ressourcen ablaufen kann. Insbesondere werden bei der Aufnahme des Betriebs alle erforderlichen Daten von den verschiedenen Ressourcen geladen, so dass diese auch bei Ausfall einer Ressource zur Verfügung steht. Für den Fall, dass eine Datenbank ausfällt und Log-Daten in diese Datenbank geschrieben werden sollen, werden die aufzuzeichnenden Daten in Listen bspw. von Dateien abgelegt und die Datenbank erst nachträglich aktualisiert.

Dazu ist der zentrale Prozessor des Börsenhandelssystems erfindungsgemäß ein oder ein Netzwerk mehrerer mit einem Computerprogramm zur Steuerung des Börsenhandelssystems eingerichteter Computer. Besonders vorteilhaft ist hier ein redundant ausgelegter Computer bzw. ein entsprechend ausgelegtes Computernetzwerk, so dass bei dem Ausfall einzelner Komponenten die Aufgaben von anderen Komponenten übernommen werden können und ein Austausch der fehlerhaften Komponenten im laufenden Betrieb möglich ist.

Um eine größtmögliche Unabhängigkeit von den einzelnen Systemkomponenten zu erhalten, wird erfindungsgemäß vorgeschlagen, dass das Computerprogramm und die bei der Ausübung benötigten Daten während des Betriebs des Börsenhandelssystems vollständig im Arbeitsspeicher des bzw. der Computer eingerichtet sind. Durch die Aufnahme der Kernprozesse in den Kernel des Systems werden die Arbeitsgeschwindigkeit des Systems erhöht und die Echtzeit-Eigenschaften verbessert.

Zur besseren Quotierung ist der Preisrechner erfindungsgemäß mit einer externen Referenzkursversorgung verbunden und bestimmt die Preisantwort und/oder das Kursupdate, d. .h den Quote, automatisch aufgrund eines Referenzkurses oder eines volumengewichteten Durchschnittskurses. Damit bestimmt der als Quotemaschine arbeitende Preisrechner die handhabbaren Kurse fortlaufend auf Basis von Referenzinformationen. Die Kurse können in Echtzeit berechnet und bspw. in einem Speicherarray vorgehalten werden, wobei bei jeder Änderung der für die Preisberechnung zugrundeliegenden Berechnungsvariablen ein neuer Preis berechnet wird. Bei der Berechnung einer Quote wird in der Regel der beste am Referenzmarkt verfügbare Kurs herangezogen. Wenn man jedoch lediglich den Kurs des Referenzmarktes berücksichtigt, kann aufgrund fehlender Liquidität des Referenzmarktes oder einer Manipulation ein nicht marktgerechter Kurs zum Nachteil des MarketMakers erzeugt werden. In einem solchen Fall wird dann ein volumengewichteter Durchschnittskurs bestimmt, der u. a. auch durch Stückelung des Orderauftrages den insgesamt günstigsten Orderpreis ermittelt.

In einer Weiterentwicklung der vorliegenden Erfindung weist der Preisrechner des Börsenhandelssystems eine Handelssteuerung für die Quotierung auf, wobei in der Handelssteuerung eine Liste mit Preisanfragen zur manuellen Beantwortung angelegt wird, wenn eine Preisanfrage nicht mit einer automatischen Preisantwort beantwortet werden kann. Falls es auf eine Preisanfrage hin nicht zu einer automatischen Preisantwort durch eine automatische Quotierung kommt, bspw. weil das maximale Handelsvolumen überschritten wurde, wird der verantwortliche MarketMaker informiert und kann die Preisanfrage manuell beantworten. Ein solcher "Request for Quote" kann insbesondere mit zusätzlicher akustischer und/oder visueller Alarmierung in eine Liste eingestellt und dem Händler mit einem von dem System vorgeschlagenen Geld/Brief-Kurs angezeigt werden. Diesen Kurs kann der Händler entweder akzeptieren, den Kurs manuell ändern oder den "Request for Quote" ganz ablehnen. Bei einer Ablehnung wird dem anfragenden Kunden über den zentralen Rechner zu seiner Information das maximal handelbare Volumen zurückgeliefert. In diesem Fall kann der Kunde entscheiden, ob er die geringere Stückzahl ordern will. Andernfalls wird der "Request for Quote" automatisch abgelehnt. Ferner kann dem MarketMaker die Möglichkeit gegeben werden, eine automatische Quotierung temporär auszuschalten, so dass nur die vorbeschriebene manuelle Quotierung möglich ist.

Zur weiteren Vereinfachung des Handelsablaufs wird'erfindungsgemäß vorgeschlagen, dass der Preisrechner eine Handelssteuerung für den Abschluss eines Handelsgeschäftes aufweist, wobei eine Handelsanforderung an die Handelssteuerung des Preisrechners weitergeleitet und zur manuellen Annahme in eine List eingestellt wird, wenn der zentrale Prozessor eine Handelsanforderung nicht ausführt, bspw. weil ein Offset-Zeitfenster bereits überschritten oder eine zu große Kursschwankung aufgetreten ist. Dann hat der MarketMaker die Möglichkeit, die Handelsanforderung dennoch zu akzeptieren, wobei ihm von der Handelssteuerung vorzugsweise eine Gewinn/Verlust-Information angezeigt wird. Bei einer manuellen Ablehnung durch den MarketMaker wird dem anfragenden Kunden über den zentralen Rechner dann der momentane Kurs und das maximal handelbare Volumen angezeigt. Wenn dies außerhalb eines einstellbaren Time-out geschieht, wird die Handelsanforderung gegenüber dem anfragenden Kunden automatisch abgelehnt. Entsprechendes gilt für den Fall, dass das handelbare Volumen, d. h. die verfügbare Liquidität, zur Zeit der Handelsanfrage nicht verfügbar ist. Ferner kann dem MarketMaker die Möglichkeit gegeben werden, automatische Transaktionen durch seinen Preisrechner zu deaktivieren. Dann muss jede Handelsanfrage manuell von ihm bearbeitet werden.

Zur Verbesserung der automatischen Kontrollmöglichkeiten des Systems wird ferner vorgeschlagen, dass der Preisrechner eine Handelssteuerung zur Handelsaussetzung von Handelsaufträgen aufweist, wobei bei jeder neuen Kursberechnung die Differenz zu mindestens dem vorhergehenden Kurs überprüft und bei Überschreiten eines bestimmten Schwellwertes der Handel ausgesetzt wird. Damit wird bei jeder neuen Kursberechnung nach festgelegten Parametern ein Vergleich zu dem oder den letzten Kursen gezogen, d. h. wenn der neu berechnete Kurs über oder unter einem vorgegebenen Schwellwert liegt, wird entweder der verantwortliche MarketMaker mittels einer Alarmnachricht informiert oder das Instrument vom Handel ausgesetzt. Der Schwellwert der Abweichung kann entweder in absoluten Größen (Geldeinheiten, Punkten, etc.) oder in Prozent zu dem oder den vorherigen Kursen festgelegt werden. Zusätzlich ist es sinnvoll, einen Mittelkurs über die letzten Endkurse zu errechnen, der als zweite Referenz zur Beurteilung der Kursentwicklung seit der letzten Kursberechnung herangezogen werden kann. Daraus ergibt sich die Möglichkeit, tendenziell stärkere Kursschwankungen zu erkennen und entsprechend darauf zu reagieren. Die Handelsaussetzung kann einzelne Wertpapiere oder ganze Wertpapiergattungen betreffen.

Zur Verbesserung der Handelsaussetzung werden erfindungsgemäß auch die Zeitspanne zu dem oder den vorhergehenden Kursen bei der Bestimmung des Schwellwertes berücksichtigt. Da die Möglichkeit besteht, dass sich nur die Geld- oder Briefseite fälschlicherweise ändert, kann zusätzlich die Spreadbreite als Absolutwert, die relative Spreadbreite in Prozent oder relative Spreadabweichung überwacht werden. Dies dient insbesondere der Tendenzbetrachtung. Für sämtliche Kontrollen sind die Schwellwerte frei konfigurierbar, wobei auch vorgesehen werden kann, dass bei Erreichen eines ersten Schwellwerts eine Information des MarketMakers und bei Erreichen eines zweiten Schwellwerts eine automatische Aussetzung des Handels erfolgt.

Eine weitere Form der Handelsaussetzung von Handelsaufträgen gemäß der vorliegenden Erfindung besteht darin, dass der Preisrechner eine entsprechende Handelssteuerung aufweist, wobei die Anzahl der handelbaren Stücke überwacht und bei Unter- oder Überschreiten eines vorgebbaren Schwellwerts der Handel ausgesetzt wird. Mit einem solchen Liquiditätsmonitor kann das handelbare Liquiditätsvolumen sinnvoll überwacht werden. Durch Parametrisierungen in den Stammdaten kann für jeden Liquiditätswert ein Minimum- oder ein Maximumwert definiert werden, wobei bei Unter- oder Überschreiten des Minimum- respektive Maximumwertes eine automatische Handelsaussetzung, eine automatische Anpassung des maximal quotierbaren Volumens auf das minimal quotierbare Volumen und/oder eine Information des verantwortlichen Händlers erfolgt, die akustisch und visuell angezeigt werden kann. Mit einem entsprechenden Trademonitor zur Darstellung der relevanten Daten steht dem als Händler fungierenden MarketMaker ein Überwachungs- und Steuerungsinstrument zur Verfügung, mit dem er die Parametrierungen für eine automatische Handelsaussetzung bestimmen oder eine manuelle Handelsaussetzung einleiten kann.

Die erfindungsgemäße Aufgabe, ein Börsenhandelssystem mit einer verbesserten Auftragsabwicklung vorzuschlagen, wird auch durch ein Internalisierungsmodul zur Filterung und Ausführung von Orderaufträgen erreicht, wobei das zwischen den Orderausgang eines Auftraggebers und dem Ordereingang eines Börsenhandelssystems anordenbare Internalisierungsmodul überprüft, ob ein Orderauftrag innerhalb der bei dem Auftraggeber vorliegenden Orderaufträge ausführbar ist, diesen im Fall der Ausführbarkeit verbucht und eine Geschäftsbestätigung an den Auftraggeber zurückmeldet und den Orderauftrag andernfalls über eine externe Schnittstelle an ein Börsensystem weiterleitet. Das Internalisierungsmodul soll Marktteilnehmern, insbesondere Best-Price-Executern wie Direktbanken, die Möglichkeit eröffnen, im Rahmen einer Börse sowie außerbörslich den eigenen Order-Flow auszuführen. Der Vorteil besteht darin, dass der Marktteilnehmer die Möglichkeit hat, sich zuerst gegen jede Order aus seinem eigenen Order-Flow zu stellen. Nur für den Fall, dass er diese Möglichkeit nicht wahrnimmt, wird die Order an eine externe Zielbörse weitergeleitet. Diese kann beispielsweise das vorbeschriebene Börsenhandelssystem sein, das dann den Auftrag von dem Internalisierungsmodul über den Intermediärrechner erhält. Durch Anwendung dieses Internalisierungsmoduls kann der Marktteilnehmer bei gleichzeitiger Verbesserung des Kurses für den Kunden auch an dem sogenannten Spread verdienen.

Bei einer Weiterentwicklung des Internalisierungsmoduls ist erfindungsgemäß vorgesehen, dass das Internalisierungsmodul eine Flow-Provider-Schnittstelle zur Verbindung mit externen Flow-Providern sowie ggf. dem Auftraggeber aufweist. Damit kann sich ein Marktteilnehmer außerbörslich mit anderen Marktteilnehmern zusammenschließen, um einen außerbörslichen Handel vorzusehen. Zur Vereinheitlichung ist es dann vorteilhaft, wenn die Kommunikation zu allen Flow-Providern einschließlich dem Auftraggeber über dieselbe Schnittstelle erfolgt.

Ferner kann das Internalisierungsmodul gemäß der vorliegenden Erfindung ein Best-Price-Modul zur Kursstellung aufweisen, welches an ein Börsenhandelssystem, insbesondere eine Datenbank u. a. zur Nutzung von Referenzkursinformationen, einen Steuer-Prozessor, einen Überwachungs-Prozessor und/oder einen Transaktions-Prozessor, anschließbar ist. Wenn das Internalisierungsmodul im Rahmen einer Börse eingesetzt wird, können die entstandenen Preise entweder börsliche oder börslich überwachte Preise sein. Durch Einbeziehung der Kursstellung und Exekution in den Überwachungs-Prozessor (Hüst-Prozessor) kann auch eine marktgerechte Ausführung der Order gewährleistet werden. In dem Best-Price-Modul steht dann ein Geld/Brief-Kurs in Abhängigkeit eines liquiden Referenzmarktes zur Verfügung.

Nachfolgend werden Ausführungsbeispiele der vorliegenden Erfindung anhand der Zeichnung näher erläutert. Dabei ergeben sich aus der Beschreibung und/oder der Zeichnung weitere Ziele und Merkmale des beschriebenen Börsenhandelssystems, die Teil der vorliegenden Erfindung sind.

Es zeigen:
- Fig. 1: schematisch ein erfindungsgemäßes Börsenhandelssystem mit einem Intermediär-Rechner, einem Preis-Rechner und einem zentralen Prozessor;
- Fig. 2: das zeitliche Verhalten eines Kursupdates mit Offset-Zeitfenster;
- Fig.3: schematisch ein erfindungsgemäßes Börsenhandelssystem mit einem Intermediär-Rechner, zwei Preis-Rechnern und einem zentralen Prozessor;
- Fig. 4: das Ergebnis eines erfindungsgemäßen Kurskalkulators;
- Fig. 5: einen möglichen Handelsablauf des erfindungsgemäßen Börsenhandelssystems im Detail;
- Fig. 6: eine externe Referenzkursversorgung für das erfindungsgemäße Börsenhandelssystem im Detail;
- Fig. 7: eine Aufzeichnung aller Transaktionen für das erfindungsgemäße Börsenhandelssystem im Detail;
- Fig. 8: den Ablauf von Systemeingriffen in das erfindungsgemäße Börsenhandelssystem im Detail;
- Fig. 9: das Log-Verfahren für das erfindungsgemäße Börsenhandelssystem im Detail;
- Fig. 10: einen Handelsbildschirm während der Ausführung eines Handelsauftrags mit dem erfindungsgemäßen Börsenhandelssystem;
- Fig. 11: einen Bestätigungsbildschirm für ein mit dem erfindungsgemäßen Börsenhandelssystem ausgeführtes Handelsgeschäft;
- Fig. 12: schematisch eine weitere Ausführungsform eines erfindungsgemäßen Börsenhandelssystems mit einem Internalisierungsmodul;
- Fig. 13: die Stammdaten eines Internalisierungsmoduls;
- Fig. 14.: ein Orderbuch in einem Internalisieungsmodul;
- Fig. 15: eine Kursüberwachung für die Handelsaussetzung;
- Fig. 16.: eine Zeitüberwachung für die Handelsaussetzung und
- Fig. 17.: eine Spreadüberwachung für die Handelsaussetzung.

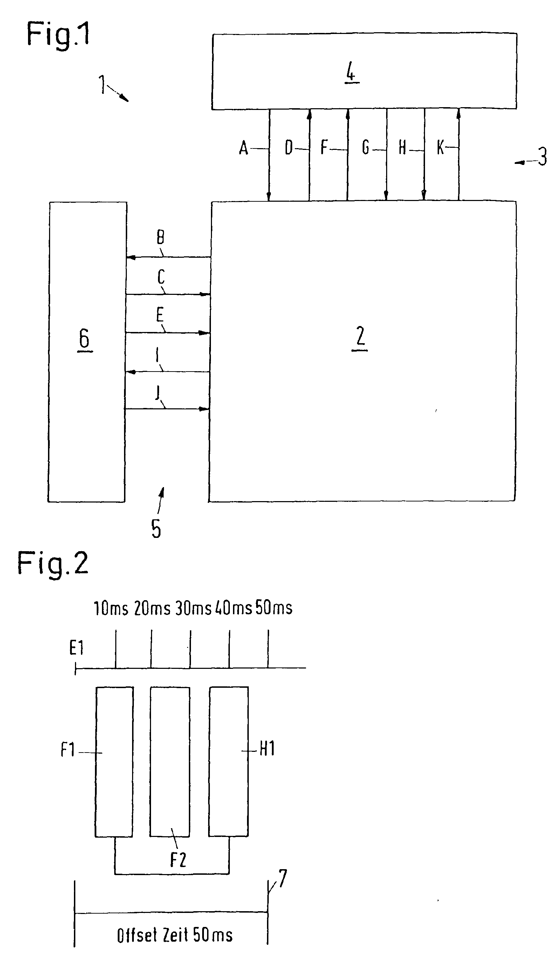

Das in Fig. 1 vereinfacht dargestellte Börsenhandelssystem 1 weist einen zentralen Prozessor 2 zur Abwicklung eines Handelsgeschäftes auf, der über eine erste Schnittstelle 3 mit einem Intermediär-Rechner 4 zur Weiterleitung von Handelsaufträgen an den zentralen Prozessor 2 und über eine weitere Schnittstelle 5 mit einem Preis-Rechner 6 zur Vorgabe eines Handelspreises verbunden ist. Der Intermediär-Rechner 4 kann bspw. einem Bankinstitut zugeordnet und über ein Netzwerk wie das Internet mit den Kunden dieses Bankinstituts verbindbar sein. Ein von dem Kunden im Internet ausgehender Handelsauftrag wird von dem Intermediär-Rechner 4 an den zentralen Prozessor 2 zunächst in Form einer Kursanfrage A weitergeleitet. Der zentrale Prozessor 2 sendet nach Erhalt dieser Kursanfrage A von dem Intermediär-Rechner 4 eine Preisanfrage B an den Preis-Rechner 6. Der Preis-Rechner 6 ist einem sogenannten "MarketMaker" zugeordnet, der in dem Börsenhandelssystem mit dem angefragten Wertpapier handelt. Auf die Preisanfrage B durch den zentralen Prozessor gibt der Preis-Rechner 6 des MarketMakers einen Handelspreis vor, den er als Preisantwort C an den zentralen Prozessor 2 zurückgibt. Aus der Preisantwort C generiert der zentrale Prozessor 2 eine Kursantwort D mit einer eindeutigen Vorgangskennung (Vorgangs-ID) und sendet sie an den Intermediär-Rechner 4.

Für einen vorgebbaren Zeitraum, bspw. die typische Umlaufzeit eines Handelsauftrags in der Größenordnung zwischen 30 bis 60 Sekunden, übermittelt der Preis-Rechner 6 den jeweils aktuellen Preis E an den zentralen Prozessor 2. Dies kann in regelmäßigen Zeitintervallen, bspw. alle 10 ms, oder nur bei einer Preisänderung geschehen. Bei jeder Preisänderung generiert der zentrale Prozessor 2 ein Kursupdate F mit einer eindeutigen Vorgangskennung, das er ebenfalls an den Intermediär-Rechner 4 sendet. Dafür wird auf gesonderte Update-Anfrage G oder entsprechend einer festen Voreinstellung in der Schnittstelle 3 zwischen dem zentralen Prozessor 2 und dem Intermediär-Rechner 4 ein eigenständiger Kursupdate-Kanal eingerichtet, damit ein Kursupdate S möglichst ohne Zeitverzögerung zum Intermediär-Rechner 4 übertragen wird.

Wenn der Kunde nun auf Basis des ihm bekannten Kurses das Handelsgeschäft tatsächlich abschließen möchte, teilt er dies dem Intermediär-Rechner 4 mit, der eine Handelsanforderung H zusammen mit der letzten übermittelten Vorgangskennung an den zentralen Prozessor 2 richtet. Der zentrale Prozessor 2 vergleicht die mit der Handelsanforderung H übermittelte Vorgangskennung mit der jeweils aktuellen Vorgangskennung und übermittelt bei Übereinstimmung eine Handelsbestätigung I an den Preis-Rechner 6 und eine Handelsbestätigung K an den Intermediär-Rechner 4.

Damit kommt das Handelsgeschäft automatisch in dem zentralen Prozessor 2 zu Stande und nicht, wie bei den aus dem Stand der Technik bekannten Systemen, auf dem Preis-Rechner 6 des MarketMakers. Um das Risiko für den MarketMaker klein zu halten, wird ihm die Möglichkeit eingeräumt, nach Empfang der Handelsbestätigung I aus bestimmten Gründen Einspruch J gegen die Ausführung des Handelsgeschäfts einzulegen. In diesem Fall erfolgt keine Handelsbestätigung K an den Intermediär-Rechner 4, sondern eine entsprechende Fehlermeldung.

Einer der Einspruchsgründe eines MarketMarkers kann eine signifikante Abweichung zwischen dem quotierten Kurs und dem Referenzkurs bei Zustandekommen des Geschäftes sein. Die Differenz wird in einem Regelwerk bestimmt. Beispielsweise kann eine Abweichung von 5% bei einer maximalen Quotierungszeit von 40s vorgesehen werden.

Wenn ein MarketMarker in diesem Fall bei einem Geld/Brief-Referenzkurs von 55,10 / 55,15 ein Quote von 55,10 / 55,14 abgibt und bei der Handelanforderung der entsprechende Referenzkurs 55,86 / 57,90 beträgt, wird das Geschäft bestätigt. Es besteht hier eine Differenz von + 5% gegenüber der abgegebenen Quote. Da die Differenz noch innerhalb des Toleranzbereiches liegt, wird kein Einspruch seitens des MarketMarkers erhoben. Dieser Regelmechanismus funktioniert in beide Richtungen +/- 5%.

Dieser Modus kann auch im außerbörslichen Handel als Alternative zu einem Zeitfenster verwendet werden. Dabei besteht der Vorteil, dass die Wahrscheinlichkeit des Zustandekommens eines Geschäftes maßgeblich erhöht wird, da ein Geschäft erst dann ggf. abgelehnt wird, wenn sich der Referenzmarkt entsprechend signifikant geändert hat. Dadurch entfällt eine starre Zeitfensterregelung.

Um zu verhindern, dass der Kunde auf der Seite des Intermediär-Rechners 4 und der MarketMaker auf der Seite des Preis-Rechners 6 bei dem Abschluss des Handelsgeschäfts von unterschiedlichen Preisen ausgehen, ist jeder Kursantwort D und jedem Kursupdate F eine eindeutige Kennung, bspw. in Form einer ID-Nummer, zugeordnet. Diese Vorgangskennung wird mit jeder Handelsanforderung H an den zentralen Prozessor 2 übermittelt und dort mit der Vorgangskennung des jeweils aktuellen Preises verglichen. Stimmen diese nicht überein, kommt kein Handelsgeschäft zustande.

Dies kann bei vielen zeitlich unmittelbar aufeinanderfolgenden Preisänderungen zu einer hohen Belastung des Systems führen, da in diesem Fall häufig die Handelsgeschäfte wegen unterschiedlicher Vorgangskennungen nicht abgeschlossen werden können. Daher erzeugt der zentrale Prozessor 2 nach einem Kursupdate F ein Offset-Zeitfenster, innerhalb dessen eine Handelsanforderung H in jedem Fall akzeptiert wird, um eventuelle Beeinträchtigungen eines erfolgreichen Handelsablauf durch System- und/oder Netzwerklaufzeiten zu vermeiden.

Die Funktionsweise wird anhand von Fig. 2 erläutert. Dort ist ein Offset-Zeitfenster 7 mit einer Dauer von 50 ms gezeigt. Die Dauer dieses Zeitfensters 7 ist so gewählt, dass sie für ein durchschnittliches Börsenhandelssystem 1 in der Regel einen vernünftigen Ausgleich zwischen einem ungestörten Handelsablauf und einer ausreichenden Sicherheit für die MarketMaker gewährleistet.

Abhängig von den Anforderungen des Börsenhandelssystems und/oder einzelner MarketMaker kann die Dauer des Zeitfensters 7 jedoch beliebig variiert werden. Hier wird das Offset-Zeitfenster 7 nach dem Übermitteln des aktuellen Preises E1 generiert, woraufhin der zentrale Prozessor 2 das erste Kursupdate F1 erzeugt. Diesem zugeordnet erhält der zentrale Prozessor 2 nach 40 ms die Handelsanforderung H1. Diese liegt zeitlich zwar nach einem bereits aktualisierten Kursupdate F2, jedoch noch innerhalb des Offset-Zeitfensters 7. Daher wird die Handelsanforderung H1 noch akzeptiert, obwohl deren Vorgangskennung nicht mit der Vorgangskennung des aktuellen Kursupdates F2 übereinstimmt.

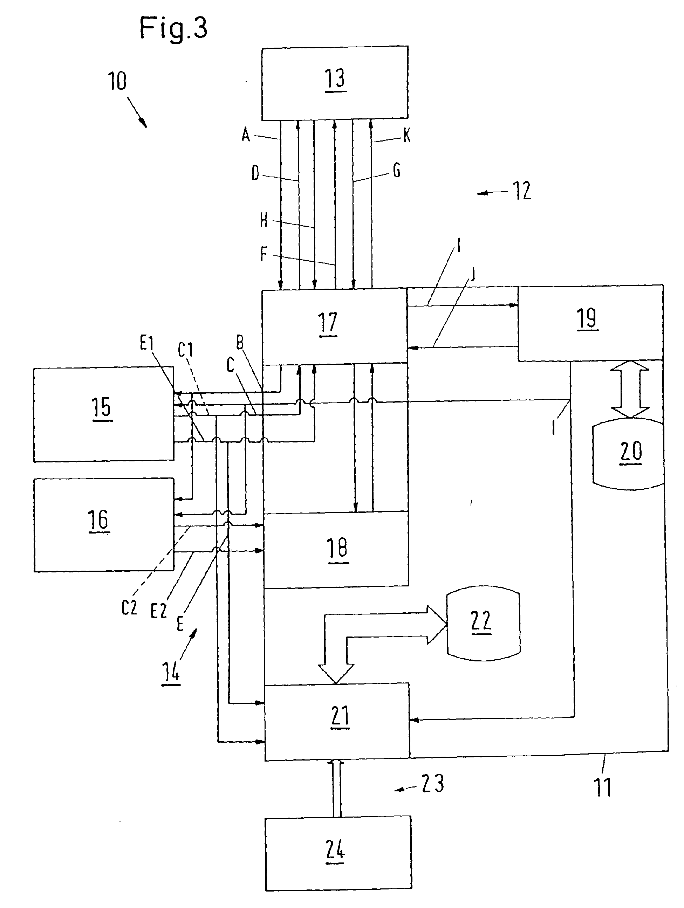

Das in Fig. 3 gezeigte Börsenhandelssystem 10 weist ebenfalls einen zentralen Prozessor 11 auf, der über eine Schnittstelle 12 mit einem Intermediär-Rechner 13 und über eine Schnittstelle 14 mit einem ersten Preis-Rechner 15 und einem zweiten Preis-Rechner 16 verbunden ist. Innerhalb des zentralen Prozessors 11 ist ein Steuer-Prozessor 17 für die Steuerung der Abläufe des Börsenhandelssystems verantwortlich.

Wenn von dem Intermediär-Rechner 13 eine Kursanfrage A an den zentralen Prozessor 11 gesendet wird, erzeugt der Steuerprozessor 17 zunächst eine für den gesamten weiteren Ablauf eindeutige Session-ID. Daraufhin sendet der Steuerprozessor 17 des zentralen Prozessors 11 eine Preisanfrage B (Quote-Anfrage) über die Schnittstelle 14 entsprechend dem Betriebsmodus an einen oder beide Preis-Rechnern, die jeweils einem das angefragte Wertpapier quotierenden MarketMaker zugeordnet sind. Aus den Preisantworten (Quote-Antworten) wird der Preis Bid / Ask Preis gebildet, der dann als Kursantwort D an den Intermediär-Rechner 13 gesendet wird. Nachdem der Intermediär-Rechner 13 die Kursantwort D empfangen hat, fordert er mit einer Update-Anfrage G bei dem Steuer-Prozessor 17 einen Kursupdate-Kanal für die fortlaufenden Kursupdates F (Quoteaktualisierungen) an. Alternativ kann das Kursupdate F auch ohne Einrichtung eines eigenen Kursupdate-Kanals an den Intermediär-Rechner 13 übertragen werden. Damit kann das Börsenhandelssystem flexibel auch mit Intermediär-Rechnern 13 kommunizieren, die noch nicht die technischen Möglichkeiten eines gesonderten Kursupdate-Kanals haben.

Für den Ablauf in dem Börsenhandelssystem 10 stehen grundsätzlich drei Betriebsmodelle zur Auswahl:
1. Im Dedicated MarketMaker Modus wird einem Preis-Rechner 15, d.h. einem MarketMaker, eine bestimmte Anzahl von Wertpapieren zugeordnet. Diese ihm zugeordneten Wertpapiere quotiert ausschließlich er auf dem Börsenhandelssystem 10. Wenn also eine Kursanfrage A an den zentralen Prozessor 11 gesendet wird, wird diese zur Kursstellung ausschließlich an den eingetragenen MarketMaker zur Quotierung weitergeleitet. Der Preis-Rechner 15 dieses MarketMakers weist dafür eine Quotemaschine zur Vorgabe des Handelspreises und eine Preispumpe für die regelmäßigen Preisaktualisierungen auf.
2. In einem Primary/Secondary MarketMaker Modus bekommt der primäre MarketMaker innerhalb einer näher geregelten Quoteverpflichtung den angefragten Quote wie ein Dedicated MarketMaker ausschließlich zugeteilt. Alle Anfragen, die außerhalb der Quoteverpflichtung liegen, werden zusätzlich an den Preis-Rechner 16 des Secondary MarketMaker weitergeleitet.
3. Entsprechendes gilt für den Multi-MarketMaker Modus, in dem die Preisanfrage B zur Quoteabgabe an alle MarketMaker weitergeleitet wird, die ein angefragtes Wertpapier quotieren.

Bei allen Preisanfragen B wird die gewünschte Anzahl, die Seite (Kauf/Verkauf) und der anfragende Intermediär-Rechner 13 den Preis-Rechnern 15, 16 der MarketMaker nicht angezeigt. Eine Ausnahme findet nur dann statt, wenn das Stillhaltevolumen, d.h. ein für bestimmte Wertpapiere oder Indizes festgelegtes Produkt aus Kurs und Stückzahl, überschritten wird. In diesem Fall wird die gewünschte Anzahl der Wertpapiere angezeigt. Zur Berechnung des Stillhaltevolumens kann in definierten Zeitintervallen (ca. 1 Minute) der zuletzt ermittelte externe Referenzkurs verwendet werden. Genauer ist die Berechnung des Stillhaltevolumens mit Realtime-Referenzkursen in Echtzeit.

Die Multi-MarketMaker-Regelung findet immer dann Anwendung, wenn das angefragte Volumen, d.h. das Produkt aus dem letzten gestellten Kurs und den angefragten Stücken, das garantierte Volumen, welches pro Wertpapier und MarketMaker einstellbar ist, überschritten wird sowie nach Schließung der Referenzbörsen. Außerdem wird eine Preisanfrage B an die Preis-Rechner 15, 16 aller MarketMaker, die das jeweilige Wertpapier quotieren, weitergeleitet, wenn der Primary oder Lead MarketMaker in der maximalen Antwortzeit nicht auf eine Preisanfrage B geantwortet hat. In diesem Fall beginnt das Zeitfenster für die Preisantwort C neu.

Wenn mehrere Preis-Rechner 15, 16 von verschiedenen MarketMakern innerhalb des Zeitfensters antworten, ermittelt der zentrale Prozessor 11 selbsttätig den für den Kunden insgesamt besten Preis und übermittelt diesen dem Intermediär-Rechner 13.

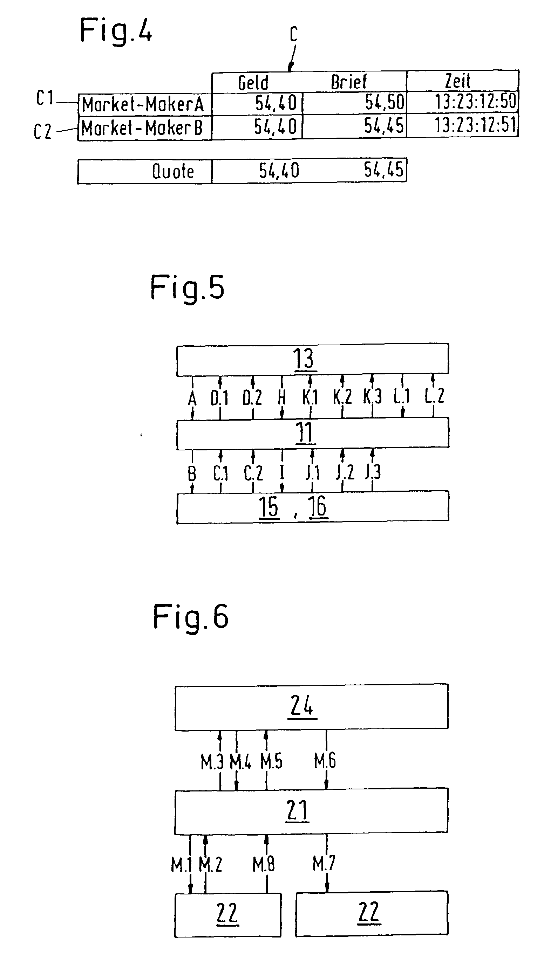

Dazu weist der Steuerprozessor 17 des zentralen Prozessors 11 einen Kurskalkulator 18 auf, an den die Preisantworten C sowie alle aktuellen Preise E von den Preis-Rechnern 15, 16 übermittelt werden. Der Kurskalkulator 18 vergleicht die eingehenden Preise, die sowohl einen Geld- als auch einen Briefkurs enthalten können, und ermittelt wie in Fig. 4 dargestellt, jeweils für den Geld- und Briefkurs den günstigsten Preis. Wenn zwei MarketMaker A und B einen identischen Preis anbieten, wird der Preis des MarketMakers A mit der früheren Preisantwort C1 weitergegeben, die anhand eines Zeitstempels feststellbar ist.

Im Dedicated MarketMaker Modus, in dem nur ein Preis-Rechner 15 eine Preisantwort C übermittelt, findet der Kurskalkulator 18 keine Anwendung.

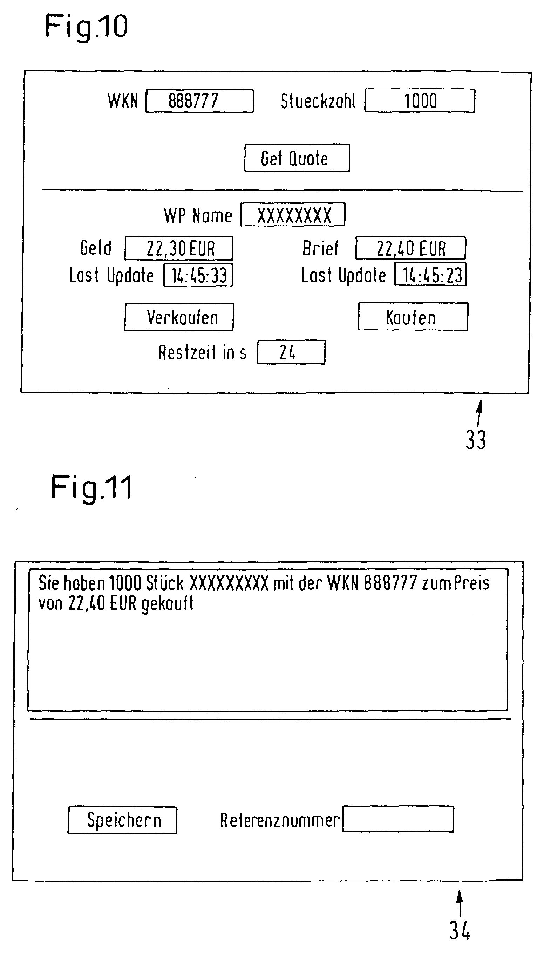

Der Steuerprozessor 17 sendet nun für eine vorbestimmte, variabel definierbare Zeit für jede registrierte Session-ID permanent den durch den Kurskalkulator 18 errechneten Preis, sofern sich dieser gegenüber dem ersten Preis geändert hat. Eine Änderung des Preises wird jeweils mit einem neuen Zeitstempel dokumentiert und kann an einem Handelsbildschirm (vgl. Fig. 10) entsprechend angezeigt werden.

Mit jedem neuen Preis E, den der Kurskalkulator 18 von der Preispumpe eines Preis-Rechners 15, 16 erhält, wird eine neue Vorgangskennung (Quoterequest-ID) generiert, die jedem Kursupdate F beigefügt ist. Diese stellt sicher, dass auf den letzten abgegebenen Preis und nicht einem bereits überholten Preis gehandelt wird. Da sich diese Vorgangskennung mit jedem Kursupdate F, d.h. im Normalfall in vergleichsweise kurzer Zeit, nach einem vorzugsweise zufällig bestimmten Muster ändert, werden zusätzlich Manipulationen an dem Börsenhandelssystem 10 erschwert.

Wenn der Steuerprozessor 17 eine Handelsanforderung H empfängt, vergleicht er, ob die Vorgangskennung der Handelsanforderung H mit der Vorgangskennung des aktuellen Preises E des letzten Preisupdates übereinstimmt. Bei Übereinstimmung wird der Handel durch Handelsbestätigungen 1, K bestätigt, andernfalls wird eine Meldung generiert, dass der Handel nicht ausgeführt werden konnte. Eine Handelsbestätigung I wird dazu von dem Steuer-Prozessor 17 an einen Transaktions-Prozessor 19 weitergeleitet, der sämtliche in dem Börsenhandelssystem 1 durchgeführte Transaktionen in einer Transaktionsdatenbank 20 ablegt und referenziert. Der Transaktions-Prozessor 19 übermittelt die Handelsbestätigung 1 dann weiter an die Preis-Rechner 15, 16, empfängt einen möglichen Einspruch J von einem der Preis-Rechner 15, 16 und leitet ihn an den Steuer-Prozessor 17 weiter. Abhängig davon, ob ein Einspruch J vorliegt oder nicht, übermittelt der Steuer-Prozessor 17 schließlich die Handelsbestätigung K an den Intermediär-Rechner 13.

Ferner weist der zentrale Prozessor 11 einen Überwachungs-Prozessor 21 auf, dem die Preisantworten C und die aktuellen Preise E der Preis-Rechner 15, 16 sowie eine Handelsbestätigung I zugeleitet werden. Der Überwachungs-Prozessor arbeitet nach den Regeln für die Handelsüberwachung (HÜST), wonach die Differenz zwischen Geld- und Briefkurs (in % zum Geldkurs) nicht größer sein darf als die maximale Spreadbreite, die bspw. für die Börsenindices Dax 30 und DJ 30 bei 1,5% und für alle anderen Wertpapiere bei 4% liegt. Die Spreadbreiten sind je Segment (z.B. Dax 30, Nemax 50) gesondert einstellbar. Damit wird erreicht, dass die in dem Börsenhandelssystem 10 gestellten und gehandelten Kurse mindestens so gut wie oder besser als die Kurse des Referenzmarktes, bspw. XETRA, sind. Jeder Verstoß gegen diese Regeln wird in der Reportdatenbank 22 protokolliert. Ferner ist der Überwachungs-Prozessor 21 über eine Schnittstelle 23 mit einer externen Referenzkursversorgung 24 verbindbar, aus der jeweils die aktuellen Kurse der gehandelten Wertpapiere abgerufen und in die Reportdatenbank 22 eingestellt werden. Auf diese Reportdatenbank 22 hat auch der Steuer-Prozessor 17 direkten Zugriff, um die Referenzkurse aller quotierten Wertpapiere während des Betriebs des Börsenhandelssystems 10 komplett in den Speicher seines Kernels zu laden. Auf diese Weise kann der Steuer-Prozessor 17 mit Unterstützung des Überwachungs-Prozessors 21 eine zuverlässige Überwachung der Transaktionen vornehmen.

Nachfolgend werden nun die im Börsenhandelssystem 10 ablaufenden Geschäftsprozesse anhand der Fig. 5 bis 9 im Detail beschrieben.

Fig. 5 veranschaulicht noch einmal die Abläufe bei einem Handelsvorgang zwischen dem Intermediär-Rechner 13, dem externen Prozessor 11 und einem Preis-Rechner 15, 16. Eine Kursanfrage A von dem Intermediär-Rechner 13, die zumindest die Wertpapierkennnummer und das gewünschte Volumen enthält, wird von dem zentralen Prozessor 11 als Preisanfrage B an den oder die Preis-Rechner 15, 16 der MarketMaker weitergeleitet. Diese liefern als Antwort eine Preisantwort C.1, die die Kursstellung mit Geld/Brief enthält, oder eine Fehlermeldung C.2. Diese werden von dem zentralen Prozessor 11 entsprechend als Kursantwort D.1 oder Fehlermeldung D.2 an den Intermediär-Rechner 13 weitergeleitet, wobei die Fehlermeldung D.2 entweder die Fehlermeldung C.2 weitergibt und/oder einen im zentralen Prozessor 11 aufgetretenen Fehler angibt.

Daran schließt sich üblicherweise eine Handelsanforderung H mit einer Anfrage über die Ausführung der Order von dem Intermediär-Rechner 13 an. Sofern das Handelsgeschäft bei Übereinstimmung der Vorgangskennungen zustande kommt, wird eine Nachricht über den Abschluss eines Geschäftes an den Preis-Rechner 15, 16 des betroffenen MarketMakers als Handelsbestätigung I gesendet. Daraufhin kann der MarketMaker über seinen Preis-Rechner 15, 16 Einspruch J.1 einlegen, so dass die Order storniert wird, eine Einspruchsverzichtserklärung J.2 abgeben, so dass die Order ausgeführt ist, oder überhaupt nicht antworten. Im letzteren Fall entsteht ein Time Out J.3, bei dem die Order auch als ausgeführt gilt. Die entsprechenden Antworten werden als Handelsstornierung K.1 oder Handelsbestätigung K.2, K.3 von dem zentralen Prozessor 11 an den Intermediär-Rechner 13 weitergeleitet. Zum Abschluss des Handelsvorgangs fordert der Intermediär-Rechner 13 den zentralen Prozessor 11 zur Referenzierung der Order mit einer Referenzierungsanfrage L.1 auf, auf die der zentrale Prozessor 11 eine Referenzierung bspw. in dem Transaktionsprozessor 19 vornimmt und in einer Referenzierungsantwort L.2 eine erfolgreiche Referenzierung oder eine Fehlermeldung mitteilt.

Fig. 6 beschreibt den Ablauf zwischen einer externen Referenzkursversorgung 24 und dem Überwachungs-Prozessor 21, der auf die Reportdatenbank 22 zugreift. Die Referenzkursversorgung beginnt mit einer Abfrage der quotierten Wertpapiere M.1 von dem Überwachungs-Prozessor 21 an den die Stammdaten aufweisenden Teil der Referenzdatenbank 22, die die Wertpapierdaten M.2 zurückgibt. Daraufhin loggt sich der Überwachungs-Prozessor 21 mit ihm zugewiesenen Daten M.3 bei dem externen Kursanbieter 24 ein und erhält eine Rückmeldung M.4. Danach werden die Parameter M.5 der Wertpapiere übergeben, deren Referenzkurse benötigt werden. Diese Anfrage beantwortet die externe Referenzkursversorgung 24 mit einem Datenstrom M.6, der die gewünschten Kursdaten enthält und mit jeder Kursänderung vorzugsweise in Echtzeit aktualisiert wird. Diese Kursdaten M.7 werden im Bereich für externe Kursdaten in der Reportdatenbank 22 gespeichert, auf die der zentrale Prozessor 11 Zugriff hat. Im Falle einer Änderung der Wertpapierdaten in den Stammdaten der Reportdatenbank 22 findet eine Aktualisierung M.8 statt.

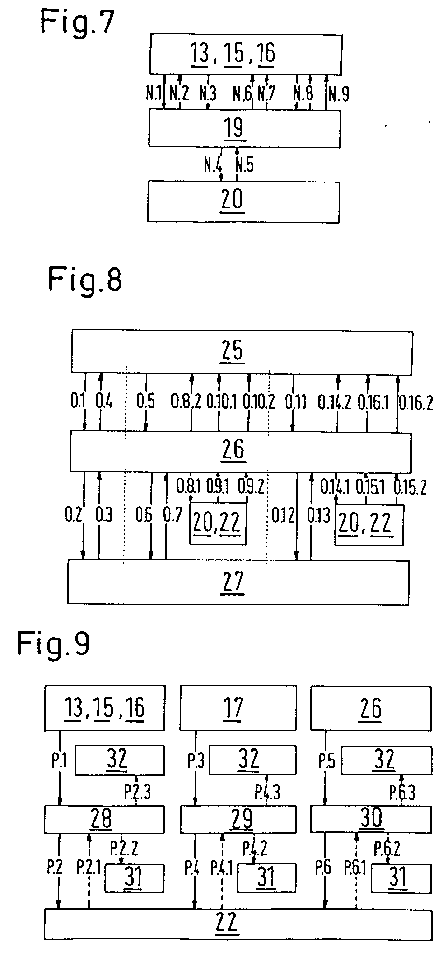

Für das Abfragen der in dem Börsenhandelssystem 10 angelegten Transaktionstabelle mit allen in dem System stattgefundenen Transaktionen wird, wie in Fig. 7 gezeigt, zunächst ein Login N.1 des Intermediär-Rechners 13 oder des Preis-Rechners 15, 16 in den Transaktions-Prozessor 19 durchgeführt, über den der Anfragende eine Rückmeldung N.2 erhält. Daraufhin wird eine Abfrage N.3 über Geschäfte mit bestimmten Parametern (Zeit der Geschäftsabwicklung, Wertpapierkennnummer oder dgl.) an den Transaktions-Prozessor 19 gerichtet, der die Anfrage als Datenbankabfrage N.4 an die Transaktionsdatenbank 20 weiterleitet, die ihm die gewünschten Daten N.5 über die gefundenen Geschäfte oder eine NULL-Menge zurückgibt. Wenn Geschäfte gefunden wurden, werden diese als Transaktions-Liste N.6 zusammen mit einer Statusmeldung N.7 über Anzahl der Geschäfte oder Fehler an den Intermediär-Rechner 13 oder den Preis-Rechner 15, 16 gesendet. Zum Beenden der Verbindung werden wechselseitig Log-out-Meldungen N.8 ausgetauscht. Optional kann auch ein automatisches Beenden N.9 der Verbindung nach einer vorgebbaren Zeit eingestellt werden.

Die Parameter der Transaktionsabfrage N werden laut Protokollvorgabe überprüft. Dies beinhaltet jedoch nicht unbedingt eine Überprüfung, ob die Angaben des Intermediär-Rechners 13 oder der Preis-Rechner 15, 16 der MarketMaker sinnvoll sind.

Nachfolgend wird anhand von Fig. 8 der allgemeine Ablauf von Frontend-Systemeingriffen erläutert. Frontend-User sind Systemadministratoren, aber auch MarketMaker oder die die Intermediär-Rechner 13 betreibenden Banken. Für diese Personen muss neben der normalen Nutzung des Börsenhandelssystems 10 die Möglichkeit gegeben sein, in das System einzugreifen bzw. Abfragen an das System zu richten. Dabei müssen unterschiedliche Berechtigungsstrukturen beachtet werden, damit die Sicherheit des Börsenhandelssystems 10 nicht beeinträchtigt wird.

Ein Frontend-User 25 loggt sich mit einer Meldung O.1 bei einem Frontend-Modul 26 ein, das die Login-Daten 0.2 an ein sich bspw. im zentralen Prozessor 11 befindliches Sicherheits-Modul 27 weiterleitet. Die Überprüfung 0.3 des Logins durch das Sicherheits-Modul 27 wird als Bestätigung/Ablehnung 0.4 des Logins zum Frontend-User 25 übermittelt. Im Falle eines erfolgreichen Logins sendet der Frontend-User 25 anschließend eine Abfrage 0.5 über Systemdaten an das Frontend-Modul 26, das eine Berechtigungsanfrage 0.6 an das Sicherheits-Modul 27 weiterleitet. Dieses überprüft, ob der angemeldete Frontend-User 25 berechtigterweise auf die gewünschten Systemdaten zugreift und gibt eine entsprechende Rückmeldung 0.7 zurück. Bei entsprechender Berechtigung findet eine Abfrage O.8.1 an eine der Systemdatenbanken 20, 22 statt, wobei diese entweder die Systemdaten O.9.1 oder eine Fehlermeldung O.9.2 zurückgeben. Wenn der Frontend-User 25 nicht zur Einsicht in die Systemdaten berechtigt ist, erhält er eine Fehlermeldung O.8.2 zurück. Als Reaktion auf die Datenabfrage 0.9 werden dem Frontend-User 25 entweder die Systemdaten O.10.1 oder eine Fehlermeldung O.10.2 zurückgegeben. Daraufhin stellt der Frontend-User 25 möglicherweise eine Anfrage O.11 auf Änderung der Systemdaten, bspw. update, delete, insert oder dgl.. Auch diese Anfrage wird an das Sicherheits-Modul 27 weitergeleitet (0.12), das je nach Berechtigungsstruktur eine Rückmeldung 0.13 an das Frontend-Modul 26 übermittelt. Abhängig von der Antwort 0.13 werden die Daten in den Systemdatenbanken 20, 22 geändert (O.14.1) oder eine Fehlermeldung O.14.2 ausgegeben. Bei erfolgreicher Änderung O.15.1 der Systemdaten erhält der Frontend-User 25 eine positive Rückmeldung O.16.1, im Falle eines Fehlers O.15.2 bei der Änderung der Systemdaten eine negative Rückmeldung O.16.2.

Abgesehen von Systemadministratoren, die auf diese Weise Änderungen im System vornehmen können, dienen die Frontend-Systemeingriffe O auch zu einer Reportabfrage und einem Audit. Durch ein nicht dargestelltes Report- und Auditing-Modul können detaillierte Auswertungen aller Aktionen im Börsenhandelssystem 10 vorgenommen werden. Dazu gehören insbesondere Daten, die zur Überwachung der Geschäfts- und Handelsprozesse und zur Überwachung der Benutzereingriffe notwendig sind. Das Report- und Auditing-Modul erhält von einem berechtigten Frontend-User Anfragen mit entsprechenden Daten zur Einschränkung oder Spezifizierung der Daten, die von dem Benutzer gewünscht sind. Das Report- und Auditing-Modul überprüft die Berechtigungen des Frontend-Users, um sicherzustellen, dass nur autorisierte Benutzer Zugriff auf die internen Daten des Börsenhandelssystems 10 haben. Auswertungen der Daten erfolgen aufgrund der in der Reportdatenbank 22 abgelegten Daten, die bspw. täglich nachaktualisiert werden. Dazu zählen u.a. folgende in der Reportdatenbank 22 vorzuhaltende Daten: eingehende und ausgehende Systemmessages (Intermediär und MarketMaker), gestellte Kurse der MarketMaker/Preis-Rechner 15, 16, alle Orderdaten wie Anfrage, Ausführung und Ablehnung und Aktivitäten aus dem Frontend-System durch Administratoren. Dem Benutzer werden dabei standardisierte Abfragen zur Verfügung gestellt, wobei die Daten am Bildschirm des Frontend-Users 25 angezeigt und ggf. in einer Datei abgespeichert werden können. Ferner unterstützt das Report- und Auditing-Modul die zeitabhängige Erstellung von Reports, bspw. zu jedem Ersten eines Monats. Ferner können Rechnungsstellungs- und Preismodellmodule vorgesehen sein.

Fig. 9 zeigt die Buchführung (Logging) von empfangenen und gesendeten Meldungen der Intermediär-Rechner 13 und Preis-Rechner 15, 16, der Daten über ermittelte Kurse und ausgeführte Orders aus dem Steuer-Prozessor 17 und durch Frontend-User 25 verursachte Aktionen. Dazu sind ein Meldungslog-Modul 28, ein Datenlog-Modul 29 und ein Aktionslog-Modul 30 vorgesehen. So werden von dem Intermediär 13 und den MarketMakern 15, 16 empfangene und gesendete Meldungen P.1 dem Meldungslog-Modul 28 zugeführt, das sie zur Speicherung in der Reportdatenbank 22 weiterleitet (P.2). Für den Fall eines Fehlers P.2.1 beim Speichern der Daten in der Datenbank wird das Meldungslog-Modul 28 benachrichtigt, das eine Speicherung P.2.2 der Meldungen in einer Datei 31 durchführt und eine Fehlermeldung P.2.3 an einen Systemmonitor 32 ausgibt. Entsprechendes gilt für Daten des Steuer-Prozessors 17, insbesondere die in seinem Kernel befindlichen Daten. Auch über die Aktionen des Frontend-Moduls 26 wird entsprechend Buch geführt.

Fig. 10 und 11 zeigen als typische Bildschirmmasken, die dem Nutzer während der Ausführung eines Handelsgeschäfts an seinem Arbeitsplatz angezeigt werden, einen Handelbildschirm 33 und einen Bestätigungsbildschirm 34.

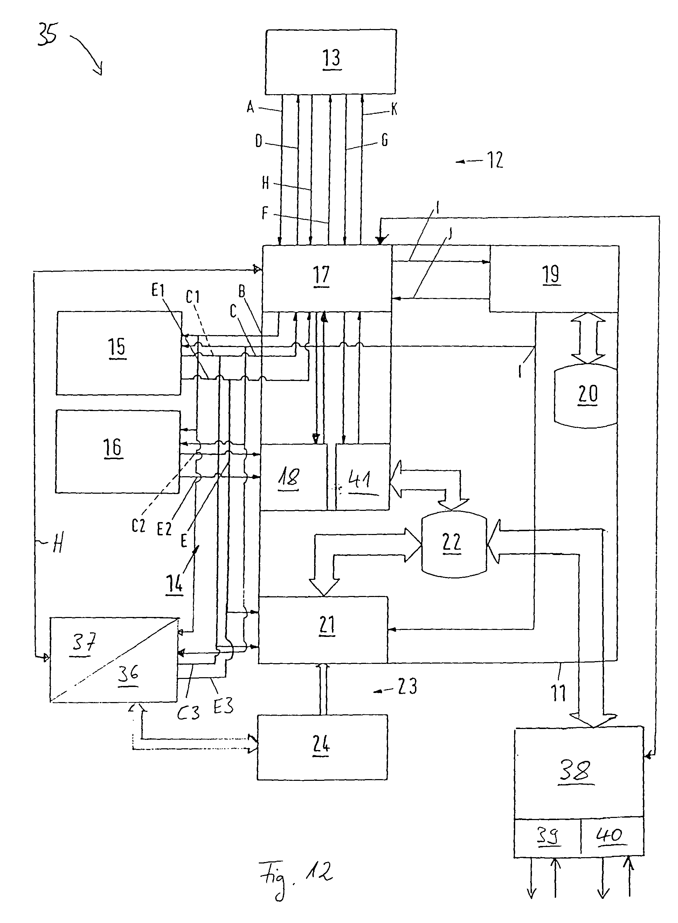

In Fig. 12 ist ein Börsenhandelssystem 35 dargestellt, das zusätzlich zu dem bereits in dem Börsenhandelssystem 10 vorgesehenen Komponenten einen Preisrechner 36 mit einer Handelssteuerung 37 und ein Internalisierungsmodul 38 aufweist. Die mit den selben Bezugszeichen versehenen identischen Systemkomponenten sowie ihre Funktion werden nachfolgend nicht mehr beschrieben.

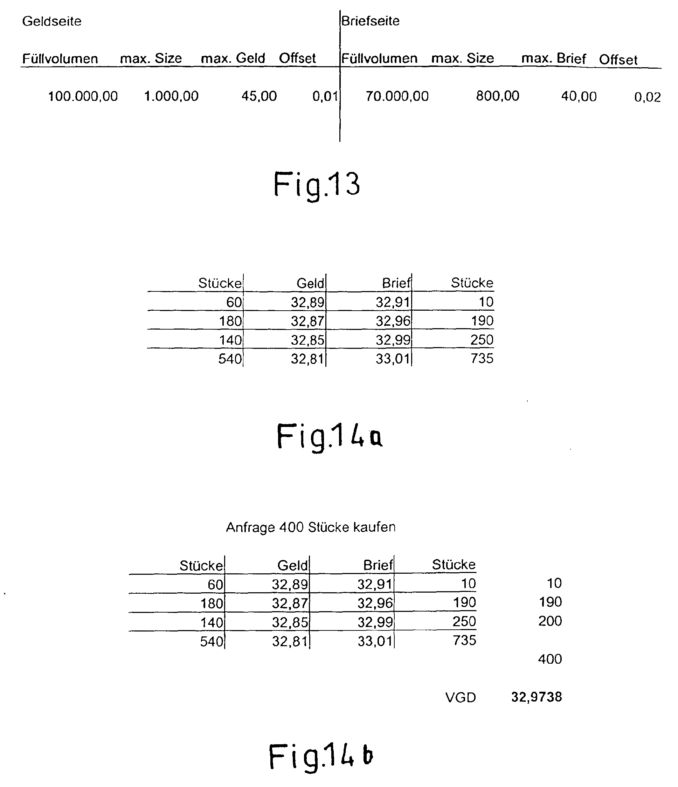

Der neue Preisrechner 36 ist wie die Preisrechner 15 und 16 mit dem zentralen Prozessor 11 und dem Steuer-Prozessor 17 verbunden. Zusätzlich kann der Preisrechner 36 bei der externen Referenzkursversorgung 24 für die Erstellung des Quote die gerade aktuellen Referenzkurse erfragen, die er vorzugsweise in Echtzeit erhält. Die für ein bestimmtes Wertpapier in der externen Referenzkursversorgung 24 gerade bekannten Kurse sind beispielhaft in Fig. 14a dargestellt. Wenn nun ein Preis- bzw. Quote für 400 Stücke dieses Wertpapiers angefragt würden, müsste dieser Auftrag aus dem teuersten Briefkurs erfüllt werden, für den 735 Stücke zum Verkauf anstehen. Wenn der Kurs dagegen nach einem volumengewichteten Durchschnittskurs berechnet wird, kann der Preisrechner 36 für die angefragten 400 Stücke aus den besten drei Orderbucheinträgen des Referenzmarktes einen volumengewichteten Durchschnitts-Briefkurs von 32,9738 errechnen, wie aus Fig. 14b ersichtlich. Somit würde ein Kurs von 32,97 in der Preisantwort C (Quoteantwort) an den Anfragenden zurückgeliefert werden. Mit dieser Methode ist eine Best-Price-Quotierung gewährleistet, da der volumengewichtete Durchschnittskurs den günstigsten tatsächlich am Referenzmarkt verfügbaren Kurs für die angefragte Ordermenge darstellt.

Ferner verfügt der Preisrechner 36 über eine Handelssteuerung 37, die eine Vielzahl verschiedener Quotierungs- und Transaktionsmodi bietet. Dafür sind verschiedene Parameter einstellbar, insbesondere unterschiedliche Volumenklassen. Dabei bezeichnen Volumen 1 und Volumen 1a die maximal bzw. minimal quotierbare Stückzahl eines Wertpapiers bei einer automatischen Quotierung. Volumen 2 und Volumen 2a beschreiben entsprechend die maximal und minimal quotierbare Stückzahl pro Wertpapier bei halbautomatischer Quotierung, bei der eine Quotierung nur automatisch beantwortet wird, wenn sie innerhalb der in Volumen 2 bzw. Volumen 2a angegebenen Grenzen liegt. Andernfalls erhält der Händler die Preisanfrage C zur manuellen Quotierung. Entsprechendes gilt bei Volumen 3 und Volumen 3a für eine halbautomatische Transaktion, bei der der Preisrechner C eine Handelsanforderung H von dem Steuer-Prozessor 17 weitergeleitet bekommt, wenn eine Transaktion nicht automatisch zustande kommt, bspw. weil die Anzahl der angefragten Stücke die in Volumen 3 und Volumen 3a angegebenen Grenzen übersteigt.

Nachfolgend wird der Ablauf der Quotierung anhand von beispielhaften Zahlen näher erläutert. Ausgangspunkt sind ein Volumen 1 von 2000, ein Volumen 1a von 200, ein Volumen 2 von 1000, ein Volumen 2a von 100, ein Volumen 3 von 1000, ein Volumen 3a von 100 und ein Volumen 10 von 3000, wobei das Volumen 10 das maximal verfügbare Handelsvolumen angibt. Bei einer Preisanfrage B (Quoteanfrage) von 2000 Stück wird im Modus einer automatischen Quotierung eine Preisantwort C gegeben, da die zu handelnden Stücke innerhalb des Volumen 1 liegt. Wenn ein Handel zustande kommt, wird Volumen 10 um 2000 auf 1000 reduziert. Bei einer nachfolgenden Preisanfrage B von 900 Stück und einem automatischen Quotiermodus wird die Preisantwort C automatisch ausgegeben. Wenn ein Handel zustande kommt, wird Volumen 10 um 900 auf 100 reduziert. Wenn nun noch einmal 900 Stücke dieses Wertpapiers angefragt werden, wird bei einer automatischen Quotierung diese Anfrage automatisch beantwortet, da sich die Stücke innerhalb des eingestellten Volumens 1, 1a befinden. Wenn daraufhin ein Handel zustande kommt, wird Volumen 10 um 900 auf -800 verringert. Wenn dagegen ein Modus der halbautomatischen Quotierung eingestellt und eine Liquiditätssteuerung eingeschaltet ist, würde in diesem Fall die Quoteanfrage an den Händler zur manuellen Bearbeitung weitergeleitet, da das insgesamt verfügbare Volumen 10 nur 100 Stück aufweist und somit die Anfrage das derzeit verfügbare Volumen übersteigt. In diesem Fall kann der Händler entscheiden, ob er den Handel dennoch durchführt und sich die fehlenden Stücke am Markt zukauft.

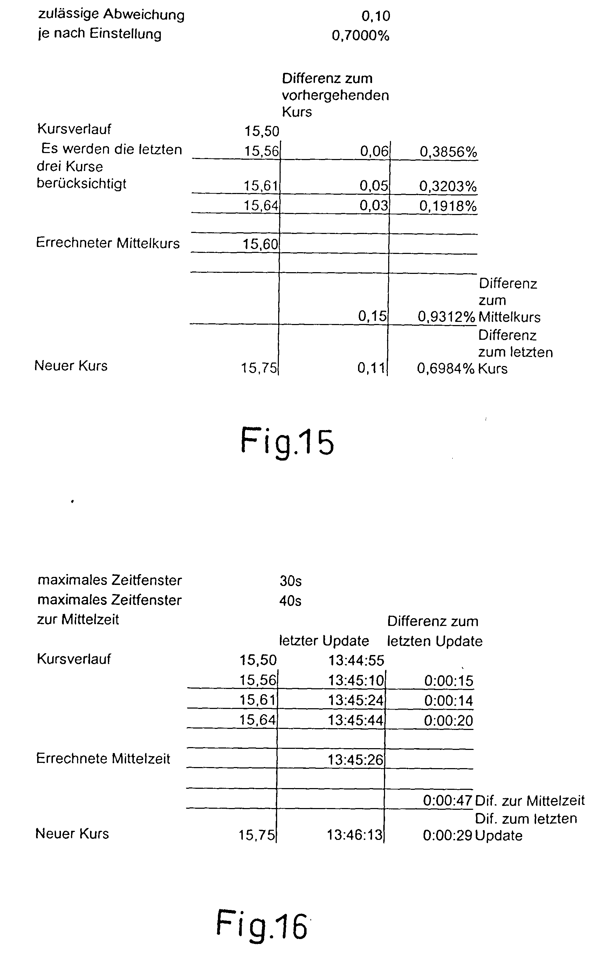

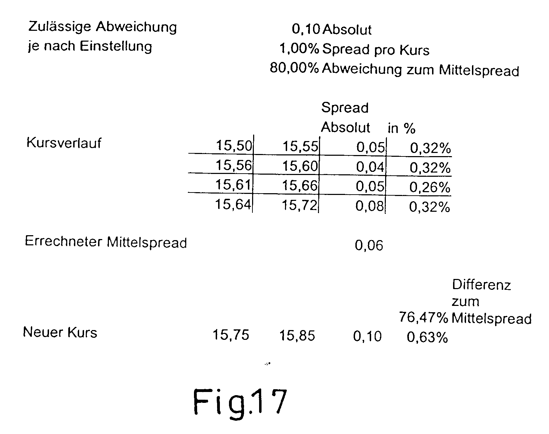

Ferner verfügt die Handelssteuerung 37 über eine Handelsaussetzung, deren Funktion mit Bezug auf die Fig. 15 bis 17 im Detail beschrieben wird. Gemäß Fig. 15 werden in einem Preisqualitätsmonitor verschiedene Kurse errechnet. Aus dem Kursverlauf der letzten drei Kurse wird ein Mittelkurs bestimmt. Dann wird ein Vergleich des neuen Kurses zu dem Mittelkurs und zu dem letzten Kurs ausgewählt. Bei den in Fig. 15 angegebenen zulässigen Abweichungen in Absolutwerten oder Prozentwerten wäre der neue Kurs bei Betrachtung der absoluten Abweichung ungültig, bei Betrachtung der relativen Änderung in Prozent zum letzten Kurs wäre der neue Kurs dagegen gültig, im Vergleich zum Mittelkurs dagegen ungültig. Somit sind alle Möglichkeiten einer sinnvollen Handelssteuerung gegeben, wobei der MarketMaker des Preisrechners 36 entscheiden kann, welche Kriterien für das Preisqualitätsmonitoring herangezogen werden. Entsprechendes gilt für die in Fig. 16 dargestellte Überwachung der Zeitspannen zwischen den letzten Kursberechnungen. Für das dargestellte Beispiel ergibt sich demnach, dass der neue Kurs innerhalb des Zeitfensters zum letzten Update, nicht aber zur errechneten Mittelzeit liegt. Eine geeignete Bewertung lässt sich insbesondere auch dann erreichen, wenn die beiden vorbeschriebenen Kriterien nach Fig. 15 und Fig. 16 miteinander kombiniert werden.

Zusätzlich kann noch nach den selben Prinzipien der Spread des Kurses berücksichtigt werden, wonach bei dem in Fig. 17 dargestellten Fall der Spread nach allen Parametern in Ordnung wäre.

Für eine Liquiditätssteuerung bzw. -überwachung der Handelssteuerung werden die zuvor beschriebenen Volumenklassen Volumen 1, Volumen 1a, Volumen 2, Volumen 2a, Volumen 3, Volumen 3a und Volumen 10 verwendet. Für das die Gesamtmenge der handelbaren Stücke darstellende Volumen 10 gibt es zwei Berechnungsarten. In der ersten Berechnungsart wird das Volumen 10 um die Anzahl der gehandelten Stücke bei jeder abgeschlossenen Transaktion unabhängig davon reduziert, ob der Handel auf der Geld- oder der Briefseite getätigt wurde. In einer zweiten Berechnungsart wird bei jeder abgeschlossenen Transaktion auf der Geldseite das Volumen 10 um die Anzahl gehandelter Stücke erhöht und bei jeder abgeschlossenen Transaktion auf der Briefseite das Volumen 10 um die Anzahl der gehandelten Stücke reduziert. Somit kann über das Volumen 10 die maximale Anzahl handelbarer Stücke pro Wertpapier eingeschränkt werden, um z. B. unbeabsichtigte Leerverkäufe oder den Verkauf von einer über ein Emissionsvolumen hinausgehenden Anzahl von Wertpapieren zu unterbinden. Wenn sich das Volumen 10 je nach Modus reduziert hat, wird der Händler darüber in seinem Handelsmonitor (Trademonitor) akustisch und/oder visuell entsprechend informiert. Er hat dann die Möglichkeit, das Volumen 10 wieder aufzufüllen. Durch Parametrisierung in den Stammdaten kann eingestellt werden, ob bei Erreichen der Grenzen der Volumen 1a, Volumen 2a und Volumen 3a das entsprechende Wertpapier automatisch vom Handel ausgesetzt wird. Dabei können sämtliche Volumen nach den Wünschen des Händlers parametriert werden.

Ferner verfügt das Börsenhandelssystem 35 gemäß Fig. 12 über ein Internalisierungsmodul 38, mit dem für einen Auftraggeber überprüft werden kann, ob ein Orderauftrag innerhalb seines eigenen Ordervolumens oder durch mit ihm verbundene externe Flow-Provider durchzuführen ist, ohne dass der Auftrag an einen externen Handelsplatz weitergegeben werden muss. Das Internalisierungsmodul 38 verfügt dabei über eine Flow-Provider-Schnittstelle 39 zur Verbindung mit dem eigenen Auftraggeber und mit diesem verbundenen Flow-Providern sowie eine externe Schnittstelle 40 zur Anbindung an eine externe Börse, bspw. den Intermediär-Rechner 13 des Börsenhandelssystems 35. Ferner ist das Internalisierungsmodul 38 mit der Datenbank 22 und dem zentralen Prozessor 17 verbunden, um die Infrastruktur des Börsenhandelssystems 35 mitnutzen zu können.

In dem Internalisierungsmodul 38 werden über die Flow-Provider-Schnittstelle 39 zugeleitete Aufträge in ein internes Orderbuch eingestellt und bilden die Liquidität des Internalisierungsmoduls 38. In dem für jeden Marktteilnehmer zur Verfügung gestellten Best-Price-Modul wird dann in Abhängigkeit eines liquiden Referenzmarktes, dessen Daten bspw. aus der Datenbank 22 bezogen werden, der Geld/Brief-Kurs des Auftraggebers berechnet. Dafür sind folgende Parameter in den Stammdaten einstellbar: das relative Geld-Offset legt den Betrag fest, um den die Geldseite im Vergleich zu einem Referenzkurs besser ist. Dieser Betrag ist immer positiv. Entsprechend legt das relative Brief-Offset den Betrag fest, um den die Briefseite besser ist. Dieser Betrag ist immer negativ. Das maximale Volumen legt auf Brief- und Geldseite die maximale Anzahl der Wertpapiere fest, die zum Ausführen von Orders in dem jeweiligen Instrument zur Verfügung stehen. Bei jeder Transaktion verringert sich das maximale Volumen um die Anzahl der gehandelten Stücke. Sollte das maximale Volumen unter die maximale Size fallen, werden solange keine Order mehr gegen den Auftraggeber ausgeführt, bis das maximale Volumen wieder aufgefüllt wurde. Die maximale Geldseite gibt den maximalen Geldkurs des Auftraggebers vor, zu dem er bereit ist ein Instrument zu kaufen. Entsprechend gibt die minimale Briefseite den minimalen Briefkurs des Auftraggebers vor. Diese Grenzen sollen davor schützen, bei volatilen Märkten eine nicht geplante Risikoposition einzugehen. Die maximale Size gibt die maximale Anzahl von Wertpapieren an, die der Auftraggeber bereit ist, in jeder Transaktion zu handeln. Ein typischer Eintrag in den Stammdaten ist Fig. 13 zu entnehmen.

Die Kursbildung für einen besten Preis (Quote) funktioniert dabei ähnlich wie in dem Preisrechner 36. Die Quotes werden automatisch in Abhängigkeit vom Referenzmarkt errechnet und müssen mindestens genauso gut oder besser sein als der Kurs am Referenzmarkt. Sollte die Liquidität am Referenzmarkt nicht ausreichen, so wird wie bereits beschrieben ein volumengewichteter Durchschnittskurs ermittelt. Kann eine Order im Internalisierungsmodul 38 nicht ausgeführt werden, wird diese an die externe Schnittstelle 40 zur Weiterleitung an die Referenzbörse 35 übergeben. Nach erfolgter Ausführung einer Order wird die Geschäftsbestätigung sowohl der externen Börse als auch eines internen Handels im Internalisierungsmodul 38 über die Flow-Provider-Schnittstelle 38 an den Auftraggeber zurückgeliefert.

In Ergänzung des quotegetriebenen Handels ist in dem Börsenhandelssystem 35 ferner ein Limit-Order-Modul 41 vorgesehen, mit dem eine Limitorder als "Immediate or Cancel", "Fill or Kill" oder als "Best of Both" ausgeführt werden kann. Das Limit-Order-Modul 41 wird auch für das Internalisierungsmodul 38 verwendet. Neben diesen bekannten Marktmodellen lassen sich auch weitere neue Marktmodelle in das Limit-Order-Modul 41 integrieren, bspw. die Möglichkeit von Teilausführungen einer Order.

Sollte bei einem Limit-Order-Auftrag aufgrund einer nicht ausreichenden Liquidität (Anzahl von Stücken) eine Order nicht ausgeführt werden, so wird dem Kunden bei einer negativen Rückmeldung die maximal verfügbare Stückzahl im Datenprotokoll mitgeliefert und in seinem Handelsfrontend angezeigt. Dann kann er entscheiden, ob er die begrenzte Stückzahl ausgeführt haben möchte. Des weiteren kann, falls eine Order im Limit-Order-Modul 41 nicht ausführbar ist, eine normale Anfrage an die Preisrechner 15, 16, 36 der MarketMaker weitergeleitet werden, sodass die Order nach dem MarketMaker-Modell ausgeführt werden könnte.

Mit den Börsenhandelssystemen 1, 10 gemäß der vorliegenden Erfindung wird ein Börsenhandelssystem nach dem MarketMaking-Prinzip bereitgestellt. Dabei werden die Handelspartner im Wertpapierhandel, nämlich Kunden bzw. Anleger/Bank und MarketMaker zusammengeführt, wobei durch die Geschäftsabwicklung im zentralen Prozessor 2, 11 aufgrund der damit verbundenen Reduzierung der Kommunikationszeiten und wegen der permanenten Quotierung ein in Echtzeit arbeitendes System angeboten werden kann.

### Bezugszeichenliste:

- 1: Börsenhandelssystem
- 2: zentraler Prozessor
- 3: Schnittstelle
- 4: Intermediär-Rechner
- 5: Schnittstelle
- 6: Preis-Rechner
- 7: Offset-Zeitfenster
- 10: Börsenhandelssystem
- 11: zentraler Prozessor
- 12: Schnittstelle
- 13: Intermediär-Rechner
- 14: Schnittstelle
- 15: erster Preis-Rechner
- 16: zweiter Preis-Rechner
- 17: Steuer-Prozessor
- 18: Kurskalkulator
- 19: Transaktions-Prozessor
- 20: Transaktionsdatenbank
- 21: Überwachungs-Prozessor
- 22: Reportdatenbank
- 23: Schnittstelle
- 24: externe Referenzkursversorgung
- 25: Frontend-User
- 26: Frontend-Modul
- 27: Sicherheits-Modul
- 28: Meldungslog-Modul
- 29: Datenlog-Modul
- 30: Aktionslog-Modul
- 31: Datei
- 32: Systemmonitor
- 33: Handelsbildschirm
- 34: Bestätigungsbildschirm
- 35: Börsenhandelssystem
- 36: Preisrechner
- 37: Handelssteuerung
- 38: Internalisierungsmodul
- 39: Flow-Provider-Schnittstelle
- 40: externe Schnittstelle
- 41: Limit-Order-Modul

- A: Kursanfrage
- B: Preisanfrage
- C: Preisantwort
- D: Kursantwort
- E: aktueller Preis
- F: Kursupdate
- G: Update-Anfrage
- H: Handelsanforderung
- I: Handelsbestätigung
- J: Einspruch
- K: Handelsbestätigung
- L: Referenzierung
- M: Referenzkursversorgung
- N: Transaktionsabfrage
- O: Frontend-Systemeingriffe
- P: Buchführung (Logging)

## Patentansprüche

1. Börsenhandelssystem mit einem zentralen Prozessor (2, 11) zur Abwicklung eines Handelsgeschäfts, der über eine Schnittstelle (3, 12) mit mindestens einem Intermediär-Rechner (4, 13) zur Weiterleitung von Handelsaufträgen an den zentralen Prozessor (2, 11) und über eine weitere Schnittstelle (5, 14) mit mindestens einem Preis-Rechner (6, 15, 16, 36) zur Vorgabe eines Handelspreises verbindbar ist, wobei
- der zentrale Prozessor (2, 11) nach Erhalt einer Kursanfrage (A) von dem Intermediär-Rechner (4, 13) eine Preisanfrage (B) an den Preis-Rechner (6, 15, 16, 36) sendet,
- der Preis-Rechner (6, 15, 16, 36) einen Handelspreis vorgibt und diesen als Preisantwort (C) an den zentralen Prozessor (2, 11) zurückgibt,
- der zentrale Prozessor (2, 11) aus der Preisantwort (C) eine Kursantwort (D) mit einer eindeutigen Vorgangskennung generiert und an den Intermediär-Rechner (4, 13) sendet,
- der Preisrechner (6, 15, 16, 36) den jeweils aktuellen Preis (E) bei einer Preisänderung oder in regelmäßigen Zeitintervallen für einen vorgebbaren Zeitraum an den zentralen Prozessor (2, 11) übermittelt, der bei jeder Preisänderung ein Kursupdate (F) mit einer eindeutigen Vorgangskennung generiert und an den Intermediär-Rechner (4, 13) sendet,
- der Intermediär-Rechner (4, 13) eine Handelsanforderung (H) zusammen mit der letzten übermittelten Vorgangskennung an den zentralen Prozessor (2, 11) richtet und
- der zentrale Prozessor (2, 11) die mit der Handelsanforderung (H) übermittelte Vorgangskennung mit der jeweils aktuellen Vorgangskennung vergleicht und bei Übereinstimmung eine Handelsbestätigung (I, K) an den Preis-Rechner (6, 15, 16, 36) und/oder den Intermediär-Rechner (4, 13) übermittelt.

2. Börsenhandelssystem nach Anspruch 1, **dadurch gekennzeichnet, dass** der zentrale Prozessor (2, 11) nach dem Übermitteln des aktuellen Preises (E) oder einem Kursupdate (F) ein Offset-Zeitfenster (7) erzeugt, innerhalb dessen eine Handelsanforderung (H) in jedem Fall akzeptiert wird, und/oder einen Bereich festlegt, innerhalb dessen der aktuelle Preis (E) bzw. das Kursupdate (F) zum Zeitpunkt der Handelsanforderung (H) liegen muss.

3. Börsenhandelssystem nach Anspruch 2, **dadurch gekennzeichnet, dass** die Dauer des Offset-Zeitfensters (7) und/oder die Breite des Bereichs einstellbar ist.

4. Börsenhandelssystem nach einem der vorhergehenden Ansprüche, **dadurch gekennzeichnet, dass** für das Kursupdate (F) in der Schnittstelle (3, 12) zwischen dem zentralen Prozessor (2, 11) und dem Intermediär-Rechner (4, 13) ein Kursupdate-Kanal eingerichtet wird.

5. Börsenhandelssystem nach einem der vorhergehenden Ansprüche, **dadurch gekennzeichnet, dass** einer Systemanfrage/-antwort (A, B, C, D, E, F, H, I, J, K) und/oder einem Systemereignis ein Zeitstempel zugeordnet wird.

6. Börsenhandelssystem nach einem der vorhergehenden Ansprüche, **dadurch gekennzeichnet, dass** eine maximale Orderzeit von einer Kursanfrage (A) bis zu einer Handelsaufforderung (H) vorgebbar ist, bei deren Überschreiten der zentrale Prozessor (2,11) den Handelsauftrag abbricht.

7. Börsenhandelssystem nach einem der vorhergehenden Ansprüche, **dadurch gekennzeichnet, dass** für einen Preis-Rechner (6, 15, 16, 36) eine maximale Antwortzeit auf eine Preisanfrage (B) vorgebbar ist, nach deren Überschreiten die Preisanfrage (B) an andere Preis-Rechner (6, 15, 16, 36) weitergeleitet oder eine Fehlermeldung an den Intermediär-Rechner (4, 13) gesendet wird.

8. Börsenhandelssystem nach einem der vorhergehenden Ansprüche, **dadurch gekennzeichnet, dass** der zentrale Prozessor (2, 11) nach Sendung einer Handelsbetätigung (I) an den Preis-Rechner (6, 15, 16, 36) eine Orderantwort (J) von dem Preis-Rechner (6, 15, 16, 36) abwartet und im Falle eines Einspruchsverzichts eine Handelsbestätigung (K) an den Intermediär-Rechner (4, 13) sendet.

9. Börsenhandelssystem nach Anspruch 8, **dadurch gekennzeichnet, dass** eine Einspruchsberechtigung durch den Preis-Rechner (6, 15, 16, 36) von der Höhe der Abweichung zwischen der Kursantwort (D) mit der zur Zeit der Handelsanforderung (H) aktuellen Vorgangskennung und dem aktuellen Preis (E) abhängt.

10. Börsenhandelssystem nach einem der vorhergehenden Ansprüche, **dadurch gekennzeichnet, dass** einem Preis-Rechner (6, 15, 16, 36 ) ein vorgebbarer Quote eines Handelsauftrags durch den zentralen Prozessor (2, 11) zugewiesen wird.

11. Börsenhandelssystem nach einem der vorhergehenden Ansprüche, **dadurch gekennzeichnet, dass** mindestens zwei Preis-Rechner (15, 16, 36) mit dem zentralen Prozessor (11) verbindbar sind und dass der zentrale Prozessor (11) einen Kurskalkulator (18) zur Ermittlung des günstigsten Kurses aufweist, wobei der zentrale Prozessor (11) eine Kursanfrage (A) an alle Preis-Rechner (15, 16, 36) sendet, der Kurskalkulator (18) die Preisantworten (C1, C2) bzw. die aktuellen Preise (E1, E2) aller Preis-Rechner (15, 16, 36) vergleicht und der jeweils günstigste Preis an den Intermediär-Rechner (13) gesendet wird.

12. Börsenhandelssystem nach einem der vorhergehenden Ansprüche, **dadurch gekennzeichnet, dass** der zentrale Prozessor (11) einen Steuer-Prozessor (17) zur Steuerung der Abläufe in dem Börsenhandelssystem (1, 10, 35), einen Überwachungs-Prozessor (21) zur Überwachung der Handelsgeschäfte, einen Transaktions-Prozessor (19) zur Aufzeichnung aller Transaktionen und/oder eine Datenbank (20, 22) aufweist.

13. Börsenhandelssystem nach einem der vorhergehenden Ansprüche, **dadurch gekennzeichnet, dass** der Preisrechner (36) mit einer externen Referenzkursversorgung (24) verbunden ist und die Preisantwort (C) und/oder das Kursupdate (F) automatisch aufgrund eines Referenzkurses oder eines volumengewichteten Durchschnittskurses bestimmt.

14. Börsenhandelssystem nach einem der vorhergehenden Ansprüche, **dadurch gekennzeichnet, dass** der Preisrechner (36) eine Handelssteuerung (37) für die Quotierung aufweist, wobei in der Handelssteuerung (37) eine Liste mit Preisanfragen (B) zur manuellen Beantwortung angelegt wird, wenn eine Preisanfrage (B) nicht mit einer automatischen Preisantwort (C) beantwortet wird.

15. Börsenhandelssystem nach einem der vorhergehenden Ansprüche, **dadurch gekennzeichnet, dass** der Preisrechner (36) eine Handelssteuerung (37) für den Abschluss eines Handelsgeschäfts aufweist, wobei eine Handelsanforderung (H) an die Handelssteuerung (37) des Preisrechners (36) weitergeleitet und zur manuellen Annahme in eine Liste eingestellt wird, wenn der zentrale Prozessor (11) eine Handelsanforderung (H) nicht akzeptiert.

16. Börsenhandelssystem nach einem der vorhergehenden Ansprüche, **dadurch gekennzeichnet, dass** der Preisrechner (36) eine Handelssteuerung (37) zur Handelsaussetzung von Handelsaufträgen aufweist, wobei bei jeder neuen Kursberechnung die Differenz zu mindestes dem vorhergehenden Kurs überprüft und bei Überschreiten eines bestimmbaren Schwellwertes der Handel ausgesetzt wird.

17. Börsenhandelssystem nach Anspruch 16, **dadurch gekennzeichnet, dass** die Zeitspanne zu dem oder den vorhergehenden Kursen bei der Bestimmung des Schwellwertes berücksichtigt wird.

18. Börsenhandelssystem nach einem der vorhergehenden Ansprüche, **dadurch gekennzeichnet, dass** der Preisrechner (36) eine Handelssteuerung (37) zur Handelsaussetzung von Handelsaufträgen aufweist, wobei die Anzahl der handelbaren Stücke überwacht und bei Unter- oder Überschreiten von vorgebbaren Schwellwerten der Handel ausgesetzt wird.

19. Internalisierungsmodul zur Filterung und Ausführung von Orderaufträgen, **dadurch gekennzeichnet, dass** das zwischen dem Orderausgang eines Auftraggebers und dem Ordereingang eines Börsenhandelssystems (1, 10, 35) anordenbare Internalisierungsmodul (38) überprüft, ob ein Orderauftrag innerhalb der bei dem Auftraggeber vorliegenden Orderaufträge ausführbar ist, diesen im Fall der Ausführbarkeit verbucht und eine Geschäftsbestätigung an den Auftraggeber zurückmeldet und den Orderauftrag andernfalls über eine externe Schnittstelle (40) an das Börsenhandelssystem (1, 10, 35) weiterleitet.

20. Internalisierungsmodul zur Filterung und Ausführung von Orderaufträgen nach Anspruch 19, **dadurch gekennzeichnet, dass** das Internalisierungesmodul (38) eine Flow-Provider-Schnittstelle (39) zur Verbindung mit externen Flow-Providern sowie ggf. dem Auftraggeber aufweist.

21. Internalisierungsmodul zur Filterung und Ausführung von Orderaufträgen nach Anspruch 19 oder 20, **dadurch gekennzeichnet, dass** das Internalisierungsmodul (38) ein Best-Price-Modul zur Kursstellung aufweist, welches an ein Börsenhandelssystem (35), insbesondere eine Datenbank (20, 22) u.a. zur Nutzung von Referenzkursinformationen, einen Steuer-Prozessor (17), einen Überwachungs-Prozessor (21) und/oder einen Transaktionsprozessor (19), anschließbar ist.
